(19) **Europäisches Patentamt / European Patent Office / Office européen des brevets**

(11) **EP 2 858 912 B1**

(12) **EUROPEAN PATENT SPECIFICATION**

(45) Date of publication and mention
of the grant of the patent:
**23.11.2016 Bulletin 2016/47**

(51) Int Cl.:
**B65D 39/00** (2006.01)

(21) Application number: **13728148.1**

(22) Date of filing: **04.06.2013**

(86) International application number:
**PCT/EP2013/061433**

(87) International publication number:
**WO 2013/182540 (12.12.2013 Gazette 2013/50)**

(54) **CLOSURE FOR A PRODUCT-RETAINING CONTAINER**

VERSCHLUSS FÜR EINEN PRODUKTLAGERUNGSBEHÄLTER

FERMETURE POUR RÉCIPIENT DESTINÉ À RETENIR UN PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.06.2012 US 201261657287 P**

(43) Date of publication of application:
**15.04.2015 Bulletin 2015/16**

(73) Proprietor: **Nomacorc LLC**
**Zebulon, NC 27597 (US)**

(72) Inventors:
• **DAVIDTS, Sandra**
**4651 Battice (BE)**

• **ZHA, Weibin**
**City of Raleigh,**
**North Carolina (US)**
• **CAMPBELL GLASGOW, Katherine**
**Wake Forest,**
**North Carolina 27587 (US)**
• **THOMPSON, Malcolm Joseph**
**City of Cary,**
**North Carolina (US)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**US-A- 5 904 965**

## Description

### Field of the Invention

The present disclosure relates to a closure for a product retaining container, to a method of preparing a closure for a product retaining container, to a closure that is obtainable by a method of the present disclosure, and to a use of the disclosed closure for sealingly closing a product-retaining container.

### Background of the Invention

In view of the wide variety of products that are sold for being dispensed from containers, particularly containers with round necks which define the dispensing portal, numerous constructions have evolved for container stoppers or closure means for the portals, including for example screw caps, stoppers, corks and crown caps, to name a few. Generally, products such as vinegar, vegetable oils, laboratory liquids, detergents, honey, condiments, spices, alcoholic beverages, and the like, have similar needs regarding the type and construction of the closure means used for containers for these products. However, wine sold in bottles represents the most demanding product in terms of bottle closure technology. In an attempt to best meet these demands, most wine bottle closures or stoppers have been produced from a natural material known as "cork".

While natural cork still remains a dominant material for wine closures, synthetic wine closures have become increasingly popular over the last years, largely due to the shortage in high quality natural cork material and the awareness of wine spoilage as a result of "cork taint", a phenomenon that is associated with natural cork materials. In addition, synthetic closures have the advantage that by means of closure technology, their material content and physical characteristics can be designed, controlled and fine-tuned to satisfy the varying demands that the wide range of different wine types produced throughout the world impose on closures.

One of the principal difficulties to which any bottle closure is subjected in the wine industry is the manner in which the closure is inserted into the bottle. Typically, the closure is placed in a jaw clamping member positioned above the bottle portal. The clamping member incorporates a plurality of separate and independent jaw members which peripherally surround the closure member and are movable relative to each other to compress the closure member to a diameter substantially less than its original diameter. Once the closure member has been fully compressed, a plunger moves the closure means from the jaws directly into the neck of the bottle, where the closure member is capable of expanding into engagement with the interior diameter of the bottle neck and portal, thereby sealing the bottle and the contents thereof.

In view of the fact that the jaw members are generally independent of each other and separately movable in order to enable the closure member to be compressed to the substantially reduced diameter, each jaw member comprises a sharp edge which is brought into direct engagement with the closure member when the closure member is fully compressed. Score lines are frequently formed on the outer surface of the closure member, which prevents a complete, leak-free seal from being created when the closure member expands into engagement with the bottle neck. This can occur, for example, if the jaw members of the bottling equipment are imperfectly adjusted or worn. Leakage of the product, particularly of liquid product, from the container can thus occur.

Thus, it is generally desirable that any synthetic bottle closure be able to withstand this conventional bottling and sealing method. Furthermore, many cork sealing members also incur damage during the bottling process, resulting in leakage or tainted wine.

Another issue in the wine industry is the capability of the wine stopper to withstand a pressure build up that can occur during the storage of the wine product after it has been bottled and sealed. Due to natural expansion of the wine during hotter months, pressure builds up, which can result in the bottle stopper being displaced from the bottle. As a result, it is generally desirable that the bottle stopper employed for wine products be capable of secure, intimate, frictional engagement with the bottle neck in order to resist any such pressure build up.

A further issue in the wine industry is the general desirability that secure, sealed engagement of the stopper with the neck of the bottle be achieved quickly, if not virtually immediately after the stopper is inserted into the neck of the bottle. During normal wine processing, the stopper is compressed, as detailed above, and inserted into the neck of the bottle to enable the stopper to expand in place and seal the bottle. However, such expansion desirably occurs immediately upon insertion into the bottle since many processors tip the bottle onto its side or neck down after the stopper is inserted into the bottle neck, allowing the bottle to remain stored in this position for extended periods of time. If the stopper is unable to rapidly expand into secure, intimate, frictional contact and engagement with the walls of the neck of the bottle, wine leakage can occur.

It is further desirable that the closure be removable from the bottle using a reasonable extraction force. Although actual extraction forces extend over a wide range, the generally accepted, conventional extraction force is typically below 100 pounds (445 Newtons).

In achieving a commercially viable stopper or closure, a careful balance must be made between secure sealing and providing a reasonable extraction force for removal of the closure from the bottle. Since the these two characteristics are believed to be in direct opposition to each other, a careful balance must be achieved so that the stopper or closure is capable of securely sealing the product, in particular the wine in the bottle, preventing or at least reducing both leakage and gas transmission, while also being removable from the bottle without requiring an excessive extraction force.

Furthermore, it is generally desirable that the closure has a low oxygen permeability. Too much oxygen can cause the premature spoilage of wine. In fact, oxidation may occur over a period of time to render the beverage undrinkable. Thus, it is desirable to effectively prevent or reduce oxygen from entering the bottle in order to extend and preserve the freshness and shelf life of the product. Any commercially viable wine stopper or closure should therefore generally have a low oxygen transfer rate (OTR).

In addition to the above, it is also desirable, for economic and environmental reasons, to reduce the total amount of material in a synthetic closure. Since the size of the closure is determined by the size of the bottle neck, reducing the amount of material can principally be achieved by reducing the density of the closure, in particular of the core member, which is generally in the form of a foamed material comprising air- or gas-filled cells. However, reducing the density of the core member generally increases the deformability of the core member and thus of the synthetic closure, which in turn results in a worsened sealing capability and thus in increased leakage. In order to avoid this, a thicker and/or denser outer layer or skin is conceivable, as is the incorporation of a stiffer and/or denser central element within the core member. However, either of these approaches increases the total amount of material, thereby diminishing or even eliminating any advantages achieved by reducing the core density.

Furthermore, it is often desirable for synthetic closures to resemble natural cork closures as closely as possible in appearance. Both the longitudinal surface and the flat ends of cylindrical cork closures generally have an irregular appearance, for example showing naturally occurring irregularities in color, structure and profile. Methods have been developed for providing synthetic closures with a physical appearance similar to natural cork, for example by blending colors to produce a streaking effect in the outer portion of the closure, along the cylindrical axis, or to provide the flat terminating ends of a synthetic closure with a physical appearance similar to natural cork.

It is, furthermore, often desirable to provide decorative indicia such as letters and ornaments on the surface of wine stoppers (e.g. the crest or emblem of a winery). Natural corks are generally marked by a method commonly referred to as "fire branding", i.e. by the application of a hot branding tool. Alternatively, natural corks may also be branded by application of colors or dyes. Due to food safety concerns, marking of natural corks with colors or dyes is generally only effected on the curved cylindrical surface of the cork that is not in direct contact with the wine. On the other hand, marking on the flat terminating surfaces of natural corks is generally effected by means of fire branding only since this method does not impose any food safety concerns.

It is also known to brand synthetic closures. Synthetic closures are commonly branded by means of inkjet printing using special dyes or colors approved for indirect food contact. Since such colors and dyes are normally not approved for direct food contact, marking of synthetic closures with colors or dyes is generally only effected on the curved cylindrical surface of the cork that is not in direct contact with the wine. Such marking can be on the outermost surface, or on an inner surface which is subsequently covered with an outer, preferably substantially transparent, layer. Marking on the flat terminating surfaces of synthetic closures is generally only known for injection molded closures, where marking is effected during the molding process of the closure by providing raised portions on the flat terminating surfaces.

Methods are available for marking the flat terminating surface of synthetic closures that have been manufactured by means of extrusion, in particular by co-extrusion. Laser marking may, in theory, be a feasible method since it allows the avoidance of direct food contact. This method is, however, inherently slow and expensive since it requires the use of special laser dye additives. Also, there have been concerns that laser marking of the flat terminating surfaces of synthetic closures may adversely change the foam structure of the core element, which may, in consequence, adversely affect the sensitive gas permeation properties of such closures.

A further method involves the application of a decorative layer, in particular of a decorative plastic layer, by means of heat and/or pressure transfer. This method allows for permanent branding of synthetic closures without giving rise to concerns relating to food safety and without negatively impacting the gas permeation and/or mechanical properties of synthetic closures, in particular of co-extruded synthetic closures.

Therefore, there exists a need for a synthetic closure or stopper which particularly comprises at least one of the characteristic features described above, said synthetic closure or stopper having a physical appearance and/or tactile characteristics similar in at least one or stopper having a physical appearance and/or tactile characteristics similar in at least one aspect to a natural cork closure, particularly with only minimal impairment, particularly with no impairment or even with improvement of the other properties of the closure such as, inter alia, OTR, leakage, ease of insertion and removal, compressibility and compression recovery, compatibility with food products.

Other and more specific needs will in part be apparent and will in part appear hereinafter.

US 5,904,965 A discloses a closure for a product-retaining container constructed for being inserted and securely retained in a portal forming neck of said container, said closure comprising a core member comprising at least one thermoplastic polymer and a peripheral layer, partially surrounding and intimately bonded to a surface of the core member, said peripheral layer comprising at least one styrene block co-polymer, wherein the core member has a preferred density of from about 200 kg/m$^3$ to 350 kg/m$^3$, the peripheral layer preferably comprises a density ranging from about 750 kg/m$^3$ to 1,000 kg/m$^3$ and the peripheral layer has a thickness ranging from 0.1 mm to 5 mm.

SUMMARY OF THE INVENTION

As will become evident from the following detailed disclosure, the synthetic closure of the present disclosure may be employed as a bottle closure or stopper for any desired product. However, for the reasons detailed above, wine products impose the most burdensome standards on a bottle closure. Consequently, in order to clearly demonstrate the universal applicability of the synthetic closure of the present disclosure, the following disclosure focuses on the applicability and usability of the synthetic closure of the present disclosure as a closure or stopper for wine containing bottles. However, this discussion is for exemplary purposes only and is not intended as a limitation of the present disclosure.

As discussed above, a bottle closure or stopper for wine must be capable of performing numerous separate and distinct functions. One principal function is the ability to withstand the pressure build up due to temperature variations during storage, as well as prevent any seepage or leakage of the wine from the bottle. Furthermore, a tight seal must also be established to prevent unwanted gas exchange between ambient conditions and the bottle interior, so as to prevent any unwanted oxidation or permeation of gases from the wine to the atmosphere. In addition, the unique corking procedures employed in the wine industry also impart substantial restrictions on the bottle closure, requiring a bottle closure which is highly compressible, has high immediate compression recovery capabilities and can resist any deleterious effects caused by the clamping jaws of the bottle closure equipment.

Although prior art synthetic products have been produced in an attempt to satisfy the need for alternate bottle closures employable in the wine industry, such prior art systems have often been found lacking in one or more of the generally desirable aspects of a bottle closure for wine products. However, by employing the present disclosure, many of the prior art disadvantages have been reduced or even obviated and an effective, easily employed, mass-produced synthetic closure has been realized.

In the present disclosure, many of the prior art disadvantages can be reduced or even overcome by achieving a synthetic closure for a product retaining container constructed for being inserted and securely retained in a portal forming neck of said container and a method for producing such a synthetic closure.

In one aspect the present disclosure provides for a closure for a product-retaining container constructed for being inserted and securely retained in a portal forming the neck of said container as defined in claim 1. Said closure comprising at least

a) a core member comprising at least one thermoplastic polymer, and
b) at least one peripheral layer at least partially surrounding and intimately bonded to at least one surface of the core member, said at least one peripheral layer comprising at least one styrene block co-polymer,

wherein
the core member has a density in the range of from about 100 kg/m$^3$ to 350 kg/m$^3$, particularly in the range of from about 150 kg/m$^3$ to about 320 kg/m$^3$, particularly in the range of from about 200 kg/m$^3$ to about 310 kg/m$^3$, particularly in the range of from about 210 kg/m$^3$ to about 300 kg/m$^3$, more particularly in the range of from about 220 kg/m$^3$ to about 290 kg/m$^3$, more particularly in the range of from about 230 kg/m$^3$ to about 280 kg/m$^3$, and the peripheral layer has a density in the range of from greater than 350 kg/m$^3$ to about 1,500 kg/m$^3$, particularly in the range of from about 450 kg/m$^3$ to about 1,300 kg/m$^3$, particularly in the range of from about 550 kg/m$^3$ to about 1,250 kg/m$^3$, particularly in the range of from about 650 kg/m$^3$ to about 1,200 kg/m$^3$, particularly in the range of from about 700 kg/m$^3$ to about 1,150 kg/m$^3$, particularly in the range of from about 750 kg/m$^3$ to about 1,100 kg/m$^3$, and a thickness in the range of from 0.15 mm to less than 0.50 mm, particularly in the range of from 0.20 mm to about 0.45 mm, particularly in the range of from about 0.25 mm to about 0.45 mm, more particularly in the range of from about 0.25 mm to about 0.45 mm, more particularly in the range of from about 0.30 mm to about 0.45 mm, more particularly in the range of from about 0.35 mm to about 0.45 mm, whereby exemplary thicknesses are about 0.15 mm, about 0.16 mm, about 0.17 mm, about 0.18 mm, about 0.19 mm, about 0.20 mm, about 0.21 mm, about 0.22 mm, about 0.23 mm, about 0.24 mm, about 0.25 mm, about 0.26 mm, about 0.27 mm, about 0.28 mm, about 0.29 mm, about 0.30 mm, about 0.31 mm, about 0.32 mm, about 0.33 mm, about 0.34 mm, about 0.35 mm, about 0.36 mm, about 0.37 mm, about 0.38 mm, about 0.39 mm, about 0.40 mm, about 0.41 mm, about 0.42 mm, about 0.43 mm, about 0.44 mm, about 0.45 mm, about 0.46 mm, about 0.47 mm, about 0.48 mm, or about 0.49 mm, whereby any one of these values can be taken as lower limit in combination with any other larger value as upper limit of an exemplary range according to the present disclosure.

The closure of the present disclosure comprises at least one peripheral layer at least partially surrounding and intimately bonded to at least one surface of the core member. The at least one peripheral layer is generally desirable in attaining a synthetic bottle closure which is suitable as a closure or stopper for the wine industry.

Due to the operation of the cooperating jaws which are employed to compress the stopper for insertion into the bottle, sharp edges of the jaw members are forced into intimate contact with the outer surface of the stopper. Prior art closures have been known to be incapable of resisting these cutting forces. As a result, longitudinal cuts, score lines or slits can be formed in the outer surface of the stopper, enabling liquid to seep from the interior to the exterior of the bottle. This disadvantage, existing with prior art cork and synthetic closures, can be reduced or even eliminated by incorporating at least one peripheral layer according to the present disclosure. In addition, by forming at least one peripheral layer as disclosed herein, the present disclosure provides a synthetic bottle closure which contributes to reducing or even overcoming the prior art disadvantages.

According to an exemplary aspect of the present disclosure, a synthetic bottle closure is realized by a peripheral layer peripherally surrounding the core member in intimate, bonded, interengagement therewith. In an exemplary aspect of the present disclosure, the closure comprises a single peripheral layer comprising at least one styrene block co-polymer. In further exemplary aspects of the present disclosure, the closure comprises two, three or four peripheral layers, each or which peripherally surrounds the core member or a further peripheral layer in intimate bonded interengagement therewith. If two, three or four peripheral layers are comprised, at least one of these, optionally two, three or all of these, but in particular at least the outermost peripheral layer, comprises at least one styrene block co-polymer. If two, three or four peripheral layers are comprised, at least one of these, optionally two, three or all of these, but in particular at least the outermost peripheral layer, comprises at least the density and thickness disclosed herein for the at least one peripheral layer.

The present disclosure particularly provides a closure having at least one peripheral layer, particularly an outermost peripheral layer, with a tough, score and mar resistant surface. In this respect, it is advantageous according to this aspect of the present disclosure that said at least one peripheral layer comprises a density in the disclosed ranges.

The thicknesses and densities disclosed for the at least one peripheral layer are capable of imparting desired physical characteristics, such as resistance to bottling conditions, to the closure of the present disclosure. The at least one peripheral layer, particularly the outer peripheral layer is, in particular, formed with a greater density than the inner core and with a selected thickness. The disclosed ranges have been found to be effective for a closure which is completely functional and achieves all of the desired goals. In particular, it has been found that by providing a closure with the disclosed features it is possible to reduce the density of the core member and also to reduce the thickness of the at least one peripheral layer compared to known synthetic closures, without impairment, and even with improvement, of desirable properties.

According to a particular aspect of the present disclosure, the at least one thermoplastic polymer of the core member is different to the at least one styrene block copolymer of the at least one peripheral layer. In particular, according to an exemplary aspect of the present disclosure the composition of the core member is different to the composition of the at least one peripheral layer. According to a particular aspect of the present disclosure, the core member does not comprise a styrene block copolymer or at least does not comprise the same styrene block copolymer as the at least one peripheral layer.

The at least one styrene block copolymer of the peripheral layer comprises at least one block comprising, particularly based on, polymerized styrene monomer units. The at least one styrene block copolymer of the peripheral layer advantageously comprises at least two blocks, particularly at least three blocks, or at least four blocks, at least two of which, or at least three of which, optionally each of which are different from at least one, or at least two, or each of the other blocks comprised. It is possible that one type of block is repeated in the smallest repeating sequence of the block copolymer. Thus, for example, conceivable styrene block copolymers according to the present disclosure can have smallest repeating sequences such as AB, ABC, ABA, ABCD, ABCA, where A, B, C and D respectively represent blocks comprising, preferably based on, a polymer sequence having at least one respective same polymerized monomer unit. If one type of block is repeated in the smallest repeating sequence of the block copolymer, such as represented by block A in the above sequences ABA and ABCA, this repeating block is particularly a block comprising, particularly based on, polymerized styrene monomer units, in particular a block consisting of polymerized styrene monomer units. The respective monomer units are also referred to as repeating units or monomer repeating units. The respective blocks of the exemplary block copolymers can have any length, size or molecular weight, in particular can be based on any number of respective monomer repeating units, in particular can consist of any number of respectively the same monomer repeating units, to provide a block copolymer having properties suitable for imparting desired physical characteristics, such as, for example, resistance to bottling conditions, ease of extraction, and the like, to the closure of the present disclosure. The at least one styrene block copolymer can further be crosslinked, in particular by means of at least one of the monomer units of at least one of the respective blocks, or by a crosslinking agent which is different to the monomer units of the respective blocks, or by both.

The at least one styrene block copolymer of the peripheral layer can further be distinguished by its properties, such as, for example, hardness, softening point, melting point, molecular weight, purity, viscosity, particularly apparent viscosity, polydispersity index, block length ratio, volume ratio, degree of crosslinking and the like.

The at least one styrene block copolymer can have a hardness in the range of from about 25 shore A to about 100 shore A, particularly in the range of from about 30 shore A to about 95 shore A, particularly in the range of from about 35 shore A to about 95 shore A, particularly in the range of from about 35 shore A to about 90 shore A, particularly in the range of from about 40 shore A to about 85 shore A, particularly in the range of from about 40 shore A to about 80 shore A, particularly in the range of from about 45 shore A to about 75 shore A.

The at least one styrene block copolymer can have a viscosity, particularly an apparent viscosity measured according to ASTM D3835 at 200 °C and a shear rate of 206 s$^{-1}$, with a die L/D of 30, in the range of from about 200 Pa.s to about 500 Pa.s,, preferably in the range of from about 250 Pa.s to about 450 Pa.s, or an apparent viscosity measured according to ASTM D3835 at 200 °C and a shear rate of 1340.5 s$^{-1}$, with a die L/D of 30, in the range of from about 65 Pa.s to about 110 Pa.s,, preferably in the range of from about 70 Pa.s to about 100 Pa.s.

The at least one styrene block copolymer comprises blocks of polystyrene and blocks of one or more further polymer. It is possible to adjust the morphology of the copolymer by adjusting the relative lengths of the respective blocks. In an exemplary aspect of the present disclosure the at least one styrene block copolymer can have a block length ratio or volume ratio of polystyrene blocks to further polymer blocks, polystyrene block length : further polymer block length, in the range of from about 10 : 90 to about 50 : 50. Exemplary block length ratios polystyrene block length : further polymer block length, or corresponding volume ratios, are 10 : 90, 15 : 85, 20 : 80, 25 : 75, 30 : 70, 35 : 65, 40 : 60, 45 : 55 and 50 : 50. By way of example, if the styrene block copolymer is styrene ethylene butadiene styrene, the block length ratio or volume ratio refers to the ratio of polystyrene to polyethylenebutadiene (PS : PEB). The ratio used can be selected by the skilled person depending on the desired properties of the styrene block copolymer. According to the present disclosure, block length ratios polystyrene : further polymer in the range greater than 50 : less than 50 result in a material which can be stiff and less elastic compared to styrene block copolymers in the exemplary range.

According to an exemplary aspect of the present disclosure, the at least one styrene block copolymer is prepared by means of living polymerisation, for example by means of atom transfer free radical polymerization (ATRP), reversible addition fragmentation chain transfer (RAFT), ring-opening metathesis polymerization (ROMP), and living cationic or living anionic polymerizations. Other known methods are, for example, chain shuttling polymerization or coupling between polymeric precursors and heterofunctional linking agents. Living polymerization has the advantage of resulting in more monodisperse blocks, helping to create a more regular microstructure. While the preparation method of the at least one styrene block copolymer is not decisive, provided that the properties of the styrene block copolymer are suitable for use in at least one peripheral layer of the present disclosure, in a particular aspect the at least one styrene block copolymer is prepared by means of living anionic polymerization

According to an exemplary aspect of the present disclosure, the at least one styrene block copolymer comprises at least one block comprising, particularly based on polymerized monomer units selected from the group consisting of monomer units which are copolymerizable to form a block copolymer with styrene or with a styrene-based polymer, in particular ethylenically unsaturated monomers, particularly selected from the group consisting of monoethylenically unsaturated monomers and diethylenically unsaturated monomers. The at least one styrene block copolymer can comprise, for example, in addition to at least one styrene block, at least one block based on polymerised ethylenically unsaturated monomer groups, for example at least one block based on polymerised monoethylenically unsaturated monomer groups, or at least one block based on polymerised diethylenically unsaturated monomer groups, or at least one block based on polymerised monoethylenically unsaturated monomer groups and at least one block based on polymerised diethylenically unsaturated monomer groups. Examples of preferred further blocks, in addition to at least one styrene block, are blocks comprising, preferably based on polymerized monomer units selected from the group consisting of olefins, acrylates or methacrylates, in particular olefins, in particular olefins selected from the group consisting of $C_2$-, $C_3$-, $C_4$-, $C_5$- and/or $C_6$-olefins, in particular selected from the group consisting of $C_2$-, $C_3$-, $C_4$-, $C_5$- and $C_6$-olefins which are monoethylenically unsaturated and $C_2$-, $C_3$-, $C_4$-, $C_5$- and $C_6$-olefins which are diethylenically unsaturated. Exemplary monomer units are ethylene, propylene, 1-butylene, cis-2-butene, trans-2-butene, isobutylene, 1,3-butadiene, 1-pentylene, cis-2-pentene, trans-2-pentene, 2-methylbut-1-ene, 3-methylbut-1-ene (isopentene), 2-methylbut-2-ene (isoamylene), 1,3-pentadiene (piperylene), 1,4-pentadiene, 2-methyl-1,3-butadiene (isoprene), 1-hexene, 2-hexene, 3-hexene, 2-methyl-1-pentene, 2-methyl-2-pentene, 3-methyl-1-pentene, 3-methyl-2-pentene, 4-methyl-1-pentene, 4-methyl-2-pentene, 2-ethyl-1-butene, 2,3-dimethyl-1-butene, 2,3-dimethyl-2-butene, 3,3-dimethyl-1-butene, 1,3-hexadiene, 1,4-hexadiene, 1,5-hexadiene, 2-methylpenta-1,3-diene, 2-methylpenta-1,4-diene, 3-methylpenta-1,3-diene, 3-methylpenta-1,4-diene, 2-ethyl-1,3-butadiene, 2,3-dimethyl-1,3-butadiene, as well as isomers thereof, in particular cis-isomers and trans-isomers.

If the monomer units should also act as crosslinkers these monomer units can comprise further groups and/or substituents which are capable of providing a crosslinking functionality, for example further groups which are copolymerizable with at least one repeating unit of at least one block, or which can form associations by means of weaker forces such as hydrogen bonding or Van der Waals forces, for example ethylenically unsaturated groups, carbonyl groups, hydroxyl groups, cationic groups, such as quaternary ammonium groups, anionic groups such as $C(O)O^-$ and the like.

The at least one styrene block copolymer may be hydrogenated.

According to an exemplary aspect of the present disclosure, the at least one styrene block copolymer is selected from the group consisting of styrene ethylene butadiene styrene block copolymers, styrene ethylene butylene styrene block copolymers, styrene ethylene butylene block copolymers, styrene butadiene styrene block copolymers, styrene butadiene block copolymers, styrene isobutylene block copolymers, styrene isoprene styrene block copolymers, styrene isoprene block copolymers, styrene ethylene propylene styrene block copolymers, styrene ethylene propylene block copolymers and combinations of two or more thereof. In particular aspects of the present disclosure, the at least one styrene block copolymer is selected from the group consisting of styrene ethylene butadiene styrene block copolymers, styrene ethylene butylene styrene block copolymers, styrene ethylene propylene styrene block copolymers, styrene ethylene propylene block copolymers and combinations of two or more thereof. Examples of commercially available styrene block copolymers according to the present disclosure are SBS, SIS, SEBS, SIBS, SEPS, SEEPS, MBS, which are available, for example under the trade names Styroflex® and Styrolux® (BASF Corporation of Wyandotte, Mich., USA), Septon® (Kuraray America, Inc., Houston, Texas, USA), Maxelast® TPE (Nantong Polymax Elastomer Technology Co., Ltd), GLOBALPRENE® Polymers (LCY Chemical Corporation), Elexar® and Monprene® (Teknor Apex Company), Elastocon® series (Elastocon TPE Technologies, Inc.), TPR (Washington Penn), Evoprene™ (Alpha Gary), Versaflex®, OnFlex®, Versalloy®, Versollan®, Dynaflex® (GLS Thermoplastic Elastomers), Sevrene™ (Vichem Corporation), Vector™ (Dexco Polymers LP), Calprene® and Solprene® (Dynasol), Multiflex® TEA and Multiflex® TPE (Multibase, Inc.), Europrene® Sol T (Polimeri Europe), Sunprene™ (PolyOne), Leostomer® (Riken Technos Corporation), RTP 2700 and 6000 series (RTP), Invision® (A. Schulman), Dryflex® (VTC Elastotechnik), Quintac® (Zeon), Megol® and Raplan® (API spa), Asaprene™ and Tufprene™ (Asahi Kasei), Thermolast® (Kraiburg TPE GmbH & Co. KG, Waldkraiberg, Germany) or Kraton®, for example Kraton® D, Kraton® G or Kraton® FG (Kraton Polymers, Houston, Texas, USA).

It is possible for the at least one peripheral layer to consist of at least one styrene block copolymer, in particular to consist of one of the styrene block copolymers mentioned herein or a combination of two or more of the styrene block copolymers mentioned herein. It can further be advantageous, for example in terms of cost, weight, processability, or properties of the at least one peripheral layer, to combine the at least one styrene block copolymer with at least one further polymer, in particular with at least one further thermoplastic elastomer.

According to a particular aspect of the closure according to the present disclosure, therefore, the peripheral layer further comprises at least one further polymer or copolymer, particularly at least one thermoplastic elastomer, which is different to the at least one styrene block copolymer.

According to an exemplary aspect of the method of the present disclosure, therefore, the at least one further polymer or copolymer is particularly selected from the group consisting of polyolefins, polyurethanes, polyamides, copolyesters and vulcanizates, in particular thermoplastic polyolefins, thermoplastic polyurethanes, thermoplastic polyamides, thermoplastic copolyesters and thermoplastic vulcanizates. In particular the at least one peripheral layer can comprise one or more materials selected from foamable thermoplastic polyurethanes, non-foamable thermoplastic polyurethanes, thermoplastic olefins, thermoplastic vulcanizates, EPDM rubber, polyolefins, olefin block copolymers, particularly flexible polyolefins, particularly polyethylenes and polypropylenes, particularly metallocene polyethylenes and polypropylenes, fluoroelastomers, fluoropolymers, fluorinated polyolefins, particularly partially fluorinated or perfluorinated polyethylenes, particularly polytetrafluoroethylenes, olefin block copolymers, polyether-type polyurethanes and mixtures or blends thereof. Particular examples of the at least one further polymer or copolymer for the at least one peripheral layer are polyethylene, particularly metallocene polyethylene, polypropylene, particularly metallocene polypropylene, EPDM rubber, styrene butadiene block copolymers, and mixtures or blends thereof. The terms "metallocene polyethylene" and "metallocene polypropylene" respectively are intended to mean polyethylene and polypropylene obtained by metallocene-catalyzed polymerization. If desired, the material of the at least one peripheral layer is substantially transparent. Furthermore, the at least one further polymer selected for the at least one peripheral layer may be different from the material of the core member.

In order to form synthetic bottle closures with all of the desirable inherent physical and chemical properties detailed above, it has been found advantageous to comprise at least one polyolefin, in particular at least one metallocene catalyst polyolefin, particularly selected from metallocene catalyst polyethylene and metallocene catalyst copolymers of ethylene with one or more further olefins, for example with propylene, butylene, pentylene, hexane, heptene, octene, nonene, decene, undecylene or dodecylene, as at least one further polymer in at least one peripheral layer. As detailed herein, at least one peripheral layer may comprise substantially metallocene catalyst polyolefin, particularly metallocene catalyst polyethylene or a metallocene catalyst copolymer of ethylene with one or more further olefins as described herein as at least one further polymer or, if desired, the metallocene catalyst polyolefin may be combined with one or more thermoplastic elastomers, particularly with one or more thermoplastic elastomers as detailed above, as at least one further polymer. In this regard, it has been found advantageous that at least one peripheral layer particularly comprises one or more polyethylenes selected from the group consisting of medium density polyethylenes, medium low density polyethylenes, and low density polyethylenes. If the at least one peripheral layer comprises at least one polyolefin, particularly at least one metallocene catalyst polyolefin, this is preferably comprised in an amount in the range of from about 1 % to about 100% by weight, particularly in the range of from about 2% to about 95% by weight, particularly in the range of from about 3% to about 90% by weight, particularly in the range of from about 4% to about 85% by weight, particularly in the range of from about 5% to about 75% by weight, particularly in the range of from about 70% by weight, particularly in the range of from about 5% to about 65% by weight, particularly in the range of from about 10% to about 60% by weight, particularly in the range of from about 10% to about 65% by weight,based upon the weight of the entire composition. The weight percent ratio of styrene block copolymer to polyolefin can be in the range of from about 0 : 100 to about 100 : 0, particularly in the range of from about 1 : 99 to about 99.9 : 0.1, or in the range of from about 5 : 95 to about 99.5 : 0.5, or in the range of from about 10 : 90 to about 99 : 1, or in the range of from about 20 : 80 to about 98 : 2, or in the range of from about 30 : 70 to about 97 : 3, or in the range of from about 40 : 60 to about 96 : 4, or in the range of from about 45 : 55 to about 95 : 5. Exemplary weight percent ratios of styrene block copolymer to polyolefin are 99 : 1, 98 : 2, 97 : 3, 96 : 4, 95 : 5, 94 : 6, 93 : 7, 92 : 8, 91 : 9, 90 : 10, 89 : 11, 88 : 12, 87 : 13, 86 : 14, 85 : 15, 84 : 16, 83 : 17, 82 : 18, 81 : 19, 80 : 20, 75 : 25, 70 : 30, 65 : 35, 60 : 40, 55 : 45, 50 : 50, 45 : 55, 60 : 40. It has been found that combining at least one styrene block copolymer with at least one polyolefin, for example at least one metallocene catalyst polyolefin can improve the adhesion of the at least one peripheral layer to the core and improve the diameter recovery, i.e. the speed and extent of expansion of the cork diameter after release from compression, for example compression during bottling.

The adhesion of the peripheral layer to the core can be determined by measuring the force necessary to peel off a strip of the peripheral layer which is attached to the core. A larger peeling force indicates a better adhesion. In an exemplary aspect of the present disclosure the adhesion measured in this way according to the herein described test method lies in the range of from about 5.00 N to about 11.40 N, particularly in the range of from about 5.20 N to about 11.00 N, particularly in the range of from about 5.40 N to about 10.80 N, particularly in the range of from about 5.50 N to about 10.70 N. A better adhesion of the peripheral layer to the core reduces or even prevents so-called "lipping" during bottling, where, for example, if the closure is not perfectly centered, the edge of the closure can catch on the edge of the bottle rim and the peripheral layer is dragged and folded to form a "lip".

The diameter recovery can be measured as instantaneous diameter and percent recovery. The instantaneous diameter is determined using an optical micrometer positioned at the outlet of the corking machine, which measures the diameter of the closure immediately after the closure has exited the corking machine. A measurement of the diameter two minutes after ejection of the closure from the corking machine can be converted into percent recovery based on the original, uncompressed diameter of the closure according to the equation: % recovery = (diameter two minutes after ejection from the corking machine / original diameter) x 100. According to an aspect of the present disclosure the percent recovery lies in the range of from about 90.0 % to 100.0 %, particularly in the range of from about 92.0 % to about 99.5 %, particularly in the range of from about 94.0 % to about 99.0 %, particularly in the range of from about 95.0 % to about 98.5 %, particularly in the range of from about 96.0 % to about 98.0 %.

Another formulation which has been found to be highly effective in providing a peripheral layer comprises at least one thermoplastic vulcanizate as at least one further polymer.

Another formulation which has been found to be highly effective in providing a peripheral layer which provides at least one, particularly more than one, particularly almost all or even all physical and chemical attributes to attain a commercially viable closure comprises at least one of at least one polyether-type thermoplastic polyurethane and at least one olefin block copolymer or a blend of at least two thereof as at least one further polymer or copolymer.

In the exemplary construction of this embodiment, the particular polyether-type thermoplastic polyurethane which can be employed as at least one further polymer for forming the at least one peripheral layer comprises Elastollan® LP9162, manufactured by BASF Corporation of Wyandotte, Mich. (US). This compound has been found to produce an outer layer in combination with at least one styrene block copolymer which provides at least one, particularly more than one, particularly almost all or even all of the physical and chemical characteristics suitable for attaining a highly effective closure for the wine industry.

In another exemplary aspect of the present disclosure, the at least one peripheral layer comprises at least one thermoplastic vulcanizate (TPV) as at least one further polymer. Suitable thermoplastic vulcanizates are well known in the art and are commercially available, for example, under the tradename Santoprene® from ExxonMobil Chemical Company of Houston, Texas (US), Sarlink® from Teknor Apex B.V., Geleen (NL) or OnFlex® from PolyOne Inc. of Avon Lake, Ohio (US).

Still further additional compounds which have been found to provide highly effective peripheral layers for forming closures, as further polymer or further copolymer in accordance with the present disclosure, comprise teflon, fluoroelastomeric compounds and fluoropolymers. These compounds, whether employed individually or in combination with each other or with the other compounds detailed above have been found to be highly effective as further polymer or further copolymer in producing a peripheral layer which is capable of providing at least one, particularly more than one, particularly almost all or even all of the properties making it suitable for synthetic bottle closures.

In principle, any of the compounds detailed herein as at least one further polymer and at least one further copolymer for providing the at least one peripheral layer can be comprised singly or in combination with each other, in combination or not in combination with at least one styrene block copolymer, particularly in the weight ratios indicated herein, to produce a peripheral layer which is securely and integrally bonded to the core member and/or to a different peripheral layer, as a foamed outer layer or a non-foamed outer layer, or as an intermediate layer. Independent of the selection of the material for the at least one further polymer and/or at least one further copolymer, the properties of the closure such as diameter recovery and adhesion of the peripheral layer to the core as described herein are considered as exemplary aspects of the closures according to the present disclosure.

In an exemplary aspect of the closure according to the present disclosure, the at least one styrene block copolymer is present in an amount in the range of from about 0.1 wt.% to about 100 wt.%, particularly in an amount in the range of from about 1 wt.% to about 99 wt.%, particularly in an amount in the range of from about 5 wt.% to about 95 wt.%, particularly in an amount in the range of from about 10 wt.% to about 90 wt.%, particularly in an amount in the range of from about 15 wt.% to about 88 wt.%, particularly in an amount in the range of from about 20 wt.% to about 85 wt.%, particularly in an amount in the range of from about 25 wt.% to about 85 wt.%, particularly in an amount in the range of from about 30 wt.% to about 85 wt.%, particularly in an amount in the range of from about 35 wt.% to about 85 wt.%, particularly in an amount in the range of from about 40 wt.% to about 80 wt.%, and the at least one further polymer and/or at least one further copolymer is or are present in an amount in the range of from 0 wt.% to about 99.9 wt.%, particularly in an amount in the range of from 1 wt.% to about 99 wt.%, particularly in an amount in the range of from 5 wt.% to about 95 wt.%, particularly in an amount in the range of from about 10 wt.% to about 90 wt.%, particularly in an amount in the range of from about 12 wt.% to about 85 wt.%, particularly in an amount in the range of from about 15 wt.% to about 80 wt.%, particularly in an amount in the range of from about 15 wt.% to about 75 wt.%, particularly in an amount in the range of from about 15 wt.% to about 70 wt.%, particularly in an amount in the range of from about 15 wt.% to about 65 wt.%, particularly in an amount in the range of from about 20 wt.% to about 60 wt.%, in each case based on the total weight of the at least one styrene block copolymer and the at least one further polymer and/or the at least one further copolymer. The amounts and ranges can be selected depending on criteria such as the desired properties of the peripheral layer, the desired properties of the closure, whether the at least one peripheral layer is the outermost peripheral layer or an inner peripheral layer, or whether it is intended to print on the peripheral layer. According to an aspect of the present disclosure, it can be advantageous if the at least one styrene block copolymer is present in an amount in the range of from about 20 wt.% to about 80 wt.%, or in an amount in the range of from about 25 wt.% to about 75 wt.%, particularly in an amount in the range of from about 30 wt.% to about 70 wt.%, particularly in an amount in the range of from about 35 wt.% to about 65 wt.%, particularly in an amount in the range of from about 40 wt.% to about 60 wt.%, particularly in an amount in the range of from about 45 wt.% to about 55 wt.%, and the at least one further polymer and/or at least one further copolymer is or are present in an amount in the range of from about 20 wt.% to about 80 wt.%, in an amount in the range of from about 25 wt.% to about 75 wt.%, particularly in an amount in the range of from about 30 wt.% to about 70 wt.%, particularly in an amount in the range of from about 35 wt.% to about 65 wt.%, particularly in an amount in the range of from about 40 wt.% to about 60 wt.%, particularly in an amount in the range of from about 45 wt.% to about 55 wt.%, in each case based on the total weight of the at least one styrene block copolymer and the at least one further polymer and/or the at least one further copolymer. These ranges have been found to be advantageous for reasons of cost, or, for example, if it is intended to print on the peripheral layer, for example by means of in-line printing. In these ranges an advantageous print quality can be achieved substantially without loss of other advantageous properties such as resistance to bottling conditions and ease of extraction. According to another exemplary aspect of the disclosure, it can be advantageous if the at least one styrene block copolymer is present in an amount in the range of from about 50 wt.% to about 100 wt.%, particularly in an amount in the range of from about 55 wt.% to about 99 wt.%, particularly in an amount in the range of from about 60 wt.% to about 98 wt.%, particularly in an amount in the range of from about 65 wt.% to about 97 wt.%, particularly in an amount in the range of from about 70 wt.% to about 96 wt.%, particularly in an amount in the range of from about 75 wt.% to about 95 wt.%, particularly in an amount in the range of from about 80 wt.% to about 95 wt.%, particularly in an amount in the range of from about 85 wt.% to about 95 wt.%, particularly in an amount in the range of from about 90 wt.% to about 95 wt.%, and the at least one further polymer and/or at least one further copolymer is or are present in an amount in the range of from 0 wt.% to about 50 wt.% wt.%, particularly in an amount in the range of from about 1 wt.% to about 45 wt.%, particularly in an amount in the range of from about 2 wt.% to about 40 wt.%, particularly in an amount in the range of from about 3 wt.% to about 35 wt.%, particularly in an amount in the range of from about 4 wt.% to about 30 wt.%, particularly in an amount in the range of from about 5 wt.% to about 25 wt.%, particularly in an amount in the range of from about 5 wt.% to about 20 wt.%, particularly in an amount in the range of from about 5 wt.% to about 15 wt.%, particularly in an amount in the range of from about 5 wt.% to about 10 wt.%, in each case based on the total weight of the at least one styrene block copolymer and the at least one further polymer and/or the at least one further copolymer. By using these ranges a closure can be achieved with improved resistance to bottling conditions, without disadvantageously affecting other advantageous properties of the closure, such as ink adhesion, appearance and efficiency of printing or OTR. Exemplary wt.% ratios of the at least one styrene block copolymer to the at least one further polymer and/or the at least one further copolymer are 50 : 50, 55 : 45; 60 : 40, 65 : 35, 70 : 30, 75 : 25, 80 : 20, 85 : 15, 90 : 10, 95 : 5, based on the total weight of the at least one styrene block copolymer and the at least one further polymer and/or the at least one further copolymer.

A composition that has been found to be highly effective in providing at least one, particularly more than one, particularly almost all or even all of the desirable attributes for at least one peripheral layer is a composition comprising as components at least one thermoplastic olefin and at least one styrene butadiene block copolymer. In the exemplary aspect, the blend of at least one thermoplastic olefin and at least one styrene butadiene block copolymer comprises the thermoplastic olefin in an amount in the disclosed ranges, based upon the weight of the at least one thermoplastic olefin and at least one styrene butadiene block copolymer in the composition. The construction of a closure using a peripheral layer formed from this blend provides a closure which is highly suitable for use as a wine bottle closure. In a particular exemplary aspect of the present disclosure, the at least one thermoplastic olefin is a metallocene olefin, in particular a metallocene polyethylene or a metallocene polypropylene. In an exemplary aspect of the disclosure, the at least one peripheral layer comprises as styrene butadiene block copolymer SEBS or SEPS and as at least one further polymer metallocene polyethylene. The composition can be used in the form of a mixture which is formed by simple mixing of the components of the composition prior to forming the peripheral layer, or in the form of a blend which is formed by combining and heating the components substantially at the point of forming the peripheral layer.

By employing the materials disclosed herein as at least one further polymer or copolymer in combination with at least one styrene block copolymer and forming the combined material in peripheral, surrounding, bonded engagement with any desired foamed core member, a highly effective, multi-layer closure is attained which is able to provide at least one, particularly more than one, particularly almost all or even all properties suitable for a wine bottle closure.

The at least one peripheral layer, particularly the outer peripheral layer particularly comprises a thickness and a density which are capable of imparting desired physical characteristics, such as resistance to bottling conditions, to the closure produced by the method of the present disclosure. The at least one peripheral layer, particularly the outer peripheral layer is, in particular, formed with a greater density than the inner core, particularly with a substantially greater density than the inner core, and with a selected thickness as disclosed. The exemplary thickness of the at least one peripheral layer can be selected according to criteria such as, for example, the composition, physical properties and/or density of the material of the at least one peripheral layer, the composition, physical properties and/or density of the material of the at least one peripheral layer, and the desired properties of the at least one peripheral layer. It has surprisingly been found that by using the present disclosure it is possible to provide a closure with the same or even improved properties compared to known closures, but with reduced amounts of material. It has been found, for example, that the same or even better properties are achieved, even with a lower density of the core member, and/or with a thinner peripheral layer, compared to known closures.

The present disclosure particularly provides a closure having a peripheral layer with a tough, score and mar resistant surface. This particularly improves the resistance to bottling conditions.

Depending upon the sealing process to be employed for inserting the synthetic closure produced by the method of the present disclosure in a desired bottle, additives, such as slip additives, lubricating agents, and sealing compounds may be comprised in at least one peripheral layer of the synthetic closure produced by the method of the present disclosure, for example to provide lubrication of the synthetic closure during the insertion process. In addition, other additives typically employed in the bottling industry may also be incorporated into the synthetic closure produced by the method of the present disclosure for improving the sealing engagement of the synthetic closure with the bottle as well as reducing the extraction forces necessary to remove the synthetic closure from the bottle for opening the bottle.

Advantageously, the closure according to the present disclosure has an extraction force determined according to the herein described test method of not more than about 400 N, particularly of not more than about 390 N, particularly of not more than about 380 N, particularly of not more than about 370 N, particularly of not more than about 360 N, particularly of not more than about 350 N, particularly of not more than about 340 N, particularly of not more than about 330 N, more particularly of not more than about 320 N, more particularly of not more than about 310 N, more particularly of not more than about 300 N, whereby extraction forces in the range of from about 200 N to about 400 N, particularly in the range of from about 210 N to about 380 N, particularly in the range of from about 220 N to about 350 N, particularly in the range of from about 230 N to about 300 N are advantageously achieved. The extraction force describes the force needed to remove a closure from a container, in particular from a bottle, under standardized conditions. A lower extraction force relates to a greater ease of extraction of the closure. An extraction force in the range of from about 200 N to about 400 N is generally considered acceptable for a wine bottle closure. It is surprising that the present disclosure achieves improved properties such as reduced leakage, while maintaining extraction force within the range considered acceptable for wine bottle closures.

The closure according to the present disclosure advantageously has an oxygen transfer rate (OTR) in axial direction as determined by Mocon measurement using 100% oxygen of from about 0.0001 to about 0.1000 cc/day/closure, in particular from about 0.0005 to about 0.050 cc/day/closure.

In an advantageous aspect of the closure according to the present disclosure, the closure has a leakage value measured according to the herein described test method of not more than 500 $mm^2$, particularly of 305 $mm^2$ or less, more particularly of 300 $mm^2$ or less. The leakage value $mm^2$, in particular of not more than 450 $mm^2$, in particular of

not more than 400 mm$^2$, in particular of not more than 350 mm$^2$, particularly of not more than 320 mm$^2$, particularly of not more than 310 provides a measure of the amount of liquid which leaks from a bottle immediately after insertion of the closure using standard bottling equipment which has been adjusted to mimic wear observed on industrial bottling machines after many hours of working, in particular many hours of working without proper maintenance. The leakage value is therefore related to the resistance of the closure to bottling conditions. A lower leakage value indicates a better resistance of the closure to bottling conditions. A leakage value of 0 mm$^2$ represents the lowest possible leakage value which can be obtained and indicates that no leakage occurs under the test conditions. Alternative lower limits for the leakage value are, for example, 1 mm$^2$, 2 mm$^2$, 3 mm$^2$, 4 mm$^2$, 5 mm$^2$, 6 mm$^2$, 7 mm$^2$, 8 mm$^2$, 9 mm$^2$, 10 mm$^2$, 15 mm$^2$, 20 mm$^2$, 25 mm$^2$, 30 mm$^2$, 35 mm$^2$, 40 mm$^2$, 45 mm $^2$ 50 mm$^2$, 55 mm$^2$, 60 mm$^2$, 65 mm$^2$, 70 mm$^2$, 75 mm$^2$, 80 mm$^2$, 85 mm$^2$, 90 mm$^2$, 95 mm$^2$, 100 mm$^2$, 110 mm$^2$, 120 mm$^2$, 130 mm$^2$, 140 mm$^2$, 150 mm$^2$, 160 mm$^2$, 170 mm$^2$, 180 mm$^2$ or 190 mm$^2$. The particular lower limits can be combined with any of the particular upper limits to form a range of advantageous leakage values. It is expected that better resistance to bottling conditions, for example lower leakage values, should be achieved with increased peripheral layer thickness. However, increased peripheral layer thickness requires use of greater amounts of peripheral layer material, increasing both cost and weight of a closure. Surprisingly, with the closures disclosed herein it is possible to achieve good or even improved resistance to bottling conditions, in particular as measured by low leakage values, with peripheral layers which are thinner than peripheral layers in known closures. More surprisingly, it is even possible to achieve good or even improved resistance to bottling conditions, in particular as measured by low leakage values, with a combination of a lower core densities and thinner peripheral layer or layers compared to known closures.

It is expected that better resistance to bottling conditions, for example lower leakage values, should be achieved with increased density of a closure, in particular with increased density of the core member. For example, increased density of the closure, in particular increased density of the core member, generally results in a stiffer or firmer closure which better resists deformation during bottling and better recovers from the compression which occurs during bottling. It has, however, been found that closures according to the present disclosure have improved or at least not worsened resistance to bottling conditions even with lower densities of the closure, in particular lower densities of the core member, compared to known closures with higher densities, in particular higher densities of the core member.

The closure according to the present disclosure can thus advantageously be defined in that the core member has a density in the range of from about 100 kg/m$^3$ to less than 235 kg/m$^3$, in particular a density in the range of from about 150 kg/m$^3$ to less than 235 kg/m$^3$, in particular a density in the range of from about 200 kg/m$^3$ to less than 235 kg/m$^3$, in particular a density in the range of from about 210 kg/m$^3$ to less than 235 kg/m$^3$, in particular a density in the range of from about 220 kg/m$^3$ to less than 235 kg/m$^3$, in particular a density in the range of from about 225 kg/m$^3$ to less than 235 kg/m$^3$, and the closure has a leakage value measured according to the herein described test method of not more than 900 mm$^2$, in particular of not more than 800 mm$^2$, in particular of not more than 700 mm$^2$, in particular of not more than 600 mm$^2$, in particular of not more than 500 mm$^2$, in particular of not more than 450 mm$^2$, in particular of not more than 400 mm$^2$, in particular of not more than 350 mm$^2$, in particular in a range of from about 0 mm$^2$ to about 500 mm$^2$, in particular in a range of from about 50 mm$^2$ to about 400 mm$^2$, in particular in a range of from about 60 mm$^2$ to about 375 mm$^2$, in particular in a range of from about 70 mm$^2$ to about 350 mm$^2$; in particular in a range of from about 80 mm$^2$ to about 325 mm$^2$; in particular in a range of from about 90 mm$^2$ to about 300 mm$^2$; or in that the core member has a density in the range of from 235 kg/m$^3$ to 260 kg/m$^3$, in particular a density in the range of from about 236 kg/m$^3$ to 260 kg/m$^3$, and the closure has a leakage value measured according to the herein described test method of not more than 300 mm$^2$, in particular of not more than 280 mm$^2$, in particular of not more than 250 mm$^2$, in particular of not more than 230 mm$^2$, in particular in a range of from about 0 mm$^2$ to 300 mm$^2$, in particular in a range of from about 10 mm$^2$ to about 250 mm$^2$, in particular in a range of from about 20 mm$^2$ to about 220 mm$^2$; or in that the core member has a density in the range of from greater than 260 kg/m$^3$ to 350 kg/m$^3$, in particular a density in the range of from about 261 kg/m$^3$ to 330 kg/m$^3$, in particular a density in the range of from about 261 kg/m$^3$ to 320 kg/m$^3$, in particular a density in the range of from about 261 kg/m$^3$ to 310 kg/m$^3$, and the closure has a leakage value measured according to the herein described test method of not more than 200 mm$^2$, in particular of not more than 150 mm$^2$, in particular of not more than 120 mm$^2$, in particular of not more than 100 mm$^2$, in particular of 90 mm$^2$ or less, in particular of 80 mm$^2$ or less, in particular of 70 mm$^2$ or less, in particular of 60 mm$^2$ or less, in particular of 50 mm$^2$ or less, in particular in a range of from 0 mm$^2$ to 150 mm$^2$, in particular in a range of from about 2 mm$^2$ to about 120 mm$^2$, in particular in a range of from about 5 mm$^2$ to about 110 mm$^2$, in particular in a range of from about 8 mm$^2$ to about 100 mm$^2$, in particular in a range of from about 10 mm$^2$ to about 90 mm$^2$, in particular in a range of from about 12 mm$^2$ to about 80 mm$^2$, in particular in a range of from about 14 mm$^2$ to about 70 mm$^2$, in particular in a range of from about 16 mm$^2$ to about 60 mm$^2$, in particular in a range of from about 18 mm$^2$ to about 50 mm$^2$.

In an advantageous aspect of the closure according to the present disclosure, the core member comprises a plurality of cells. Such a plurality of cells is generally achieved in a foamed material, also referred to as a foam or as a foamed plastic. The closure according to the present disclosure particularly comprises at least one foamed material. In a particular aspect of the method, the core material comprises a foamed material. The peripheral layer can also comprise an at least partially foamed material. However, the at least one peripheral layer is formed with a substantially greater density than the core material, in order to impart desired physical characteristics to the synthetic bottle closure of the present disclosure. According to an exemplary aspect of the method according to the present disclosure, the core member is foamed and the at least one peripheral layer is substantially not foamed, particularly not foamed.

Where the closure according to the present disclosure comprises a plurality of cells, as in a foamed material, in particular if the core member comprises a plurality of cells, it is advantageous that the cell size and/or cell distribution in the foam, particularly in the core member, are substantially uniform throughout the entire length and/or diameter of the foamed material, particularly are substantially uniform throughout the entire length and/or diameter of the core member. In this way closures with substantially uniform properties, such as, for example OTR, compressibility and compression recovery, can be provided

The plurality of cells of the disclosed closure is further advantageously defined as being a plurality of substantially closed cells, or that the foam is a substantially closed cell foam. In particular, the core member is exemplarily defined as comprising substantially closed cells. Closed cell foams are generally defined as comprising cells, also referred to as pores, which are substantially not interconnected with each other. Closed cell foams have higher dimensional stability, lower moisture absorption coefficients, and higher strength compared to open-cell-structured foams.

In order to assure that the core member of the closure possesses inherent consistency, stability, functionality and capability of providing long-term performance, the cell size of the foamed core material is particularly substantially homogeneous throughout its entire length and diameter. The foam thus particularly comprises a cell size characterized by a range of from about 0.025 mm minimum to about 0.5 mm maximum, in particular from about 0.05 mm minimum to about 0.35 mm maximum. The cell size is measured according to standard test methods known to the skilled person.

In another exemplary aspect of the present disclosure, the core member comprises closed cells having at least one of an average cell size in the range of from about 0.02 millimeters to about 0.50 millimeters, and a cell density in the range of from about 8,000 cells/cm$^3$ to about 25,000,000 cells/cm$^3$. Although this cell configuration has been found to produce a highly effective product, it has been found that even more advantageous products comprise an average cell size in the range of from about 0.05 mm to about 0.35 mm, and/or a cell density in the range of from about 10,000 cells/cm$^3$ to about 8,000,000 cells/cm$^3$.

In order to control the cell size in the core member of the closure, and attain the desired cell size detailed above, a nucleating agent can be employed. In a particular embodiment, it has been found that by employing a nucleating agent selected from the group consisting of calcium silicate, talc, clay, titanium oxide, silica, barium sulfate, diatomaceous earth, and mixtures of citric acid and sodium bicarbonate, the desired cell density and cell size is achieved.

As is well known in the industry, a blowing agent can be employed in forming extruded foam plastic material such as is advantageous for the core member. In the present disclosure, a variety of blowing agents can be employed during the extruded foaming process whereby the core member is produced. Typically, either physical blowing agents or chemical blowing agents are employed. Suitable blowing agents that have been found to be efficacious in producing the core member of the present disclosure comprise one or more selected from the group consisting of: aliphatic hydrocarbons having 1-9 carbon atoms, halogenated aliphatic hydrocarbons having 1-9 carbon atoms and aliphatic alcohols having 1-3 carbon atoms. Aliphatic hydrocarbons include methane, ethane, propane, n-butane, isobutane, n-pentane, isopentane, neopentane, and the like. Among halogenated hydrocarbons and fluorinated hydrocarbons they include, for example, methylfluoride, perfluoromethane, ethyl fluoride, 1,1-difluoroethane (HFC-152a), 1,1,1-trifluoroethane (HFC-430a), 1,1,1,2-tetrafluoroethane (HFC-134a), pentafluoroethane, perfluoroethane, 2,2-difluoropropane, 1,1,1-trifluoropropane, perfluoropropane, perfluorobutane, perfluorocyclobutane. Partially hydrogenated chlorocarbon and chlorofluorocarbons for use in this disclosure include methyl chloride, methylene chloride, ethyl chloride, 1,1,1-trichlorethane, 1,1-dichlorol-fluoroethane (HCFC-141b), 1-chloro 1,1-difluoroethane (HCFC-142b), 1,1-dichloro-2,2,2-trifluoroethane (HCFC-123) and 1-chloro-1,2,2,2-tetrafluoroethane (HCFC-124). Fully halogenated chlorofluorocarbons include trichloromonofluoromenthane (CFC11), dichlorodifluoromenthane (CFC-12), trichlorotrifluoroethane (CFC-113), dichlorotetrafluoroethane (CFC-114), chloroheptafluoropropane, and dichlorohexafluoropropane. Fully halogenated chlorofluorocarbons are not preferred due to their ozone depiction potential. Aliphatic alcohols include methanol, ethanol, n-propanol and isopropanol. Chemical blowing agents include azodicarbonamic, azodiisobutyro-nitride, benzenesulfonhydrazide, 4,4-oxybenzene sulfonylsemicarbazide, p-toluene sulfonylsemicarbazide, barium azodicarboxlyate, N,N'-Dimethyl-N,N'-dinitrosoterephthalamide, trihydrazinotriazine, and hydrocerol.

In a particular aspect, inorganic (or physical) blowing agents are used in making the foamed material according to the method according to the present disclosure. Examples of inorganic blowing agents include carbon dioxide, water, air, helium, nitrogen and argon. Carbon dioxide is a particularly useful blowing agent.

According to another exemplary embodiment of the method according to the present disclosure, in order to produce the desired product, the blowing agent may be incorporated into the plastic melt in a quantity ranging from about 0.005% to about 10% by weight of the weight of the plastic material.

In an exemplary aspect according to the method according to the present disclosure the synthetic bottle closure of the present disclosure comprises, as its principal component, a core member which is formed from extruded, foamed, thermoplastic polymers, copolymers, or homopolymers, or blends thereof. Although any known foamable thermoplastic polymeric material can be employed in the bottle closure of the present disclosure, the thermoplastic plastic material must be selected for producing physical properties similar to natural cork, so as to be capable of providing a synthetic closure for replacing natural cork as a closure for wine bottles. By way of example, the thermoplastic plastic material for the core member can be a closed cell plastic material.

According to an exemplary aspect of the method according to the present disclosure, said closure particularly comprises one or more thermoplastic polymers. Particularly at least one, particularly both of the core material and the material of the at least one peripheral layer comprise one or more thermoplastic polymers. In an exemplary aspect, the at least one peripheral layer comprises a thermoplastic polymer identical or similar to the thermoplastic polymer comprised in the core member. However, as detailed herein, the physical characteristics imparted to the peripheral layer particularly differ substantially from the physical characteristics of the core member.

According to an exemplary aspect of the method of the present disclosure, therefore, the core member comprises at least one thermoplastic polymer selected from the group consisting of polyethylenes, metallocene catalyst polyethylenes, polybutanes, polybutylenes, polyurethanes, silicones, vinyl-based resins, thermoplastic elastomers, polyesters, ethylenic acrylic copolymers, ethylene-vinyl-acetate copolymers, ethylene-methyl-acrylate copolymers, thermoplastic polyurethanes, thermoplastic olefins, thermoplastic vulcanizates, flexible polyolefins, fluorelastomers, fluoropolymers, polyethylenes, polytetrafluoroethylenes, and blends thereof, ethylene-butyl-acrylate copolymers, ethylene-propylene-rubber, styrene butadiene rubber, styrene butadiene block copolymers, styrene block copolymers, ethylene-ethyl-acrylic copolymers, ionomers, polypropylenes, and copolymers of polypropylene and copolymerizable ethylenically unsaturated comonomers, olefin block copolymers and mixtures thereof. If a polyethylene is employed, in an exemplary aspect of the method disclosed herein the polyethylene comprises one or more polyethylenes selected from the group consisting of high density, medium density, low density, linear low density, ultra high density, and medium low density polyethylenes. Particularly useful plastic materials for the core element can be polyethylene, in particular LDPE, and/or ethylene-vinyl-acetate copolymer (EVA). These materials can be used alone or in combination with one or more other thermoplastic polymers disclosed herein, in particular with metallocene PE or metallocene PP, particularly with metallocene PE.

According to an aspect of the present disclosure the core member does not comprise a fatty acid or a fatty acid derivative.

According to another aspect of the present disclosure, the core member further comprises at least one of at least one fatty acid and at least one fatty acid derivative. In order to achieve this, one or more fatty acid derivatives can be added to the at least one thermoplastic polymer which is used to prepare the core member. Exemplary fatty acid derivatives according to the present disclosure are fatty acid esters or fatty acid amides such as stearamides. The addition of at least one fatty acid derivative to the polymer composition of the synthetic closure imparts superior properties to the synthetic closure. In particular, it has been found that the oxygen transfer rate of the closure can be reduced substantially, thus further reducing unwanted oxidation of wine. In addition, it has been found that the use of a fatty acid derivative as additive does not have a negative impact on the performance characteristics of synthetic corks such as extraction force, ovality control, diameter control and length control. In order to impart the desired OTR-reducing effect to the closure, the fatty acid derivative, if present, is used according to an exemplary aspect of the present disclosure in a concentration from about 0.01 wt.% to about 10 wt.%, in particular from about 0.1 wt.% to about 5 wt.%, more particularly from about 1 wt.% to about 3 wt.%, based on the total weight of thermoplastic polymer.

If the core member comprises a fatty acid or a fatty acid derivative as disclosed herein, the closure can advantageously have a leakage value measured according to the herein described test method of not more than 100 mm$^2$, particularly of not more than 90 mm$^2$, particularly of not more than 80 mm$^2$, particularly of not more than 70 mm$^2$, particularly of not more than 60 mm$^2$, particularly of not more than 50 mm$^2$.

The closure according to any of the preceding claims particularly has a substantially cylindrical shape comprising substantially flat terminating surfaces forming the opposed ends of said closure and the substantially flat terminating surfaces of the core member are substantially devoid of the peripheral layer. The closure has a substantially cylindrical form comprising a substantially cylindrical peripheral surface and two substantially flat terminating faces at the opposing ends of the cylindrical form. In addition to a core member which possesses a construction with physical characteristics similar to natural cork, and has a substantially cylindrical form with a substantially cylindrical peripheral surface, the closure of the present disclosure comprises at least one peripheral layer at least partially surrounding and intimately bonded to at least one surface, particularly the substantially cylindrical surface, of the core member. The ends of the closure can be beveled or chamfered, as is known from the prior art. Although any desired bevel or chamfered configuration can be employed, such as a radius, curve, or flat surface, it has been found that merely cutting the terminating ends at the intersection with the longitudinal cylindrical surface of the elongated length of material, with or without at least one peripheral layer as described herein, at an angle in the range of from about 30° to about 75°, for example in the range of from about 35° to about 70°, particularly in the range of from about 40° to about 65°, allows formation of a closure which is easier to insert into the neck of a container. Angles of about 45°, 46°, 47°, 48°, 49°, 50°, 51°, 52°, 53°, 54°, 55°, 56°, 57°, 58°, 59° or 60° have been found particularly to contribute to the present disclosure. The bevel or chamfer angle is measured relative to the longitudinal axis of the cylindrical closure.

The closure of the present disclosure advantageously has an overall density of from about 100 kg/m$^3$ to about 800 kg/m$^3$, in particular from about 200 kg/m$^3$ to about 500 kg/m$^3$, in particular from about 220 kg/m$^3$ to about 400 kglm$^3$, in particular from about 250 kg/m$^3$ to about 375 kg/m$^3$.

The closure of the present disclosure particularly comprises the at least one peripheral layer intimately bonded to substantially the entire substantially cylindrical surface of the core member. If any large unbonded areas exist, flow paths for gas and liquid could result. Consequently, secure, intimate, bonded interengagement of the at least one peripheral layer with the core member is advantageous for attaining a bottle closure for the wine industry.

In order to achieve integral bonded interconnection between the at least one peripheral layer and the core member, the at least one peripheral layer is formed about the core member in a manner which assures intimate bonded engagement. The closure according to the present disclosure is particularly formed by extrusion.

Particularly, the desired secure, intimate, bonded, interengagement is attained by simultaneous co-extrusion of the at least one peripheral layer and the core member or by applying the at least one peripheral layer to the continuous, elongated length of material after the continuous, elongated length of material has been formed. By employing either process, intimate bonded interengagement of the at least one peripheral layer to the continuous, elongated length of material is attained.

In one aspect where the closure is formed by extrusion, said core member and said at least one peripheral layer are therefore extruded substantially simultaneously.

In another aspect where the closure is formed by extrusion, therefore, said core member is extruded separately and subsequent thereto said at least one peripheral layer is formed in extrusion equipment peripherally surrounding and enveloping the pre-formed core member.

In further aspects of the disclosed closure, comprising two or more peripheral layers, it is possible that a first peripheral layer which is in secure, intimate, bonded, interengagement with the outer cylindrical surface of the core member is formed by either substantially simultaneous extrusion with the core member, or by subsequent extrusion, as described herein. A second and subsequent peripheral layers can then be formed likewise by either substantially simultaneous extrusion with the core member and the first or further peripheral layers, or by subsequent extrusion, as described herein for the first peripheral layer. With multiple peripheral layers it is also possible that two or more peripheral layers are extruded subsequently, as described herein, but substantially simultaneously with each other.

It has also been found that further additional additives may be incorporated into either the core member and/or the at least one peripheral layer of the synthetic closure according to the present disclosure in order to provide further enhancements and desirable performance characteristics. These additional additives incorporate antimicrobial agents, antibacterial compounds, and or oxygen scavenging materials. Suitable additives are known to the person skilled in the art. The antimicrobial and antibacterial additives can be incorporated into the closure to impart an additional degree of confidence that in the presence of a liquid the potential for microbial or bacterial growth is extremely remote. These additives have a long-term time release ability and further increase the shelf life without further treatments by those involved with the bottling of wine. Furthermore, it is possible for the cells of the closure to be substantially filled with a non-oxidising gas, in order to further reduce oxygen ingress into the container. Ways of achieving this are known in the prior art.

As discussed above, intimate bonded interengagement of the at least one peripheral layer to the core member is advantageous for providing a synthetic bottle closure capable of being used in the wine industry. In this regard, although it has been found that the methods detailed above provide secure intimate bonded interengagement of the at least one peripheral layer to the continuous, elongated, substantially cylindrically shaped length of a material, alternative layers or bonding chemicals can be employed, depending upon the particular materials used for forming the continuous, elongated, substantially cylindrically shaped length of a material and the at least one peripheral layer.

If desired, bonding agents or tie layers known to the skilled person can be employed on the outer surface of the continuous, elongated, substantially cylindrically shaped length of a material in order to provide secure intimate bonded interengagement of the at least one peripheral layer therewith. If a tie layer is employed, the tie layer would effectively be interposed between the continuous, elongated, substantially cylindrically shaped length of a material and the at least one peripheral layer to provide intimate bonded interengagement by effectively bonding the peripheral layer and the continuous, elongated, substantially cylindrically shaped length of a material to the intermediately positioned tie layer. However, regardless of which process or bonding procedure is employed, all of these alternate embodiments are within the scope of the present disclosure. If more than one peripheral layer is present, such bonding agents or tie layers can similarly be employed between respective peripheral layers.

In addition, the closures obtained by the method of the present disclosure may also comprise decorative indicia such as letters, symbols, colors, graphics, and wood tones printed on at least one peripheral layer and/or one of the substantially flat terminating surfaces forming the opposed ends of said closure or stopper. Printing of these indicia can be performed in-line, during production of the closure or in a separate step after the closure has been manufactured. Accordingly, the closure of the present disclosure may comprise a decorative effect on at least one of the peripheral layer and the substantially flat terminating surfaces forming the opposed ends of said closure or stopper.

The closure according to the present disclosure can further comprise a silicone layer on at least one of its surfaces, in particular on its peripheral surface. Such a layer can help for example with insertion of the closure into a container. If a silicone layer is present, this is particularly formed by extrusion and/or by tumbling.

The present disclosure further relates to a method for producing a closure as described in claim 14. Said method comprising at least the steps of:

A. providing a first composition comprising at least one thermoplastic polymer;

B. optionally providing at least one blowing agent to the composition comprising at least one thermoplastic polymer to obtain a composition comprising at least one thermoplastic polymer and at least one blowing agent;

C. at least one of before, during and after method step B., heating the composition provided in method step A. or the composition obtained in method step B. to obtain a heated composition;

D. extruding a continuous, elongated, substantially cylindrically shaped length of the heated composition obtained in method step C. to obtain, as core member, a continuous elongated length of thermoplastic polymer having a cylindrical surface;

E. providing a second composition comprising at least one styrene block co-polymer;

F. extruding a separate and independent peripheral layer of the composition provided in method step E. separately to, co-axially to and in intimate bonded engagement with the continuous, elongated length of thermoplastic polymer obtained in method step D., said separate and independent peripheral layer peripherally surrounding and substantially enveloping the cylindrical surface of the continuous, elongated length of thermoplastic polymer to obtain a multi-component elongated structure having a cylindrical surface;

G. cutting the multi-component elongated structure obtained in method step F. in a plane substantially perpendicular to the central axis of said multi-component elongated structure to obtain a closure;

H. optionally printing, coating, or post-treating at least one of the continuous elongated length of thermoplastic polymer obtained in method step D., the multi-component structure obtained in method step F. and the closure obtained in method step G..

The details regarding the composition provided in method step A. are the same as the details for the thermoplastic polymers described herein for the core member of the closure of the present disclosure. If a combination of thermoplastic polymers is used, the composition provided in method step A. comprises this combination.

The details regarding the blowing agent provided in method step B. are the same as the details for the blowing agent described herein with respect to the closure of the present disclosure. Further additives can also be provided in method step B., such as, for example, at least one nucleating agent. Details regarding such additives are the same as the details regarding additives described herein with respect to the closure of the present disclosure.

If a fatty acid or a fatty acid derivative should be present in the closure according to the disclosure, this is advantageously provided in method step A. or in method step B. Details regarding suitable fatty acids and fatty acid derivatives are the same as the details regarding suitable fatty acids and fatty acid derivatives described herein with respect to the closure of the present disclosure.

The heating in method step C. preferably occurs to a temperature at which the composition provided in method step A. or the composition obtained in method step B. are soft enough to enable foaming to the desired density and/or extrusion of the respective composition. If a blowing agent is used which requires heat to provide the blowing effect, the heating in method step C. preferably occurs to a temperature at which this blowing effect can occur. Suitable temperatures depend principally on the thermoplastic polymer and blowing agent selected and can be easily determined by the skilled person based on the known properties of the thermoplastic polymer and blowing agent and/or based on simple trials.

Method step D. can occur in any way known to the skilled person and appearing suitable, in particular using known extrusion equipment.

The details regarding the composition provided in method step E. are the same as the details regarding suitable materials, compounds and compositions described herein with respect to the at least one peripheral layer of the closure of the present disclosure.

According to an aspect of the method according to the present disclosure, method step F. occurs substantially simultaneously with method step D.

According to a further aspect of the method according to the present disclosure, method step F. occurs after method step D.

According to a further aspect of the method according to the present disclosure, method step F. can be repeated one or more times in order to obtain one or more further peripheral layers, whereby the one or more further peripheral layers are separately extruded in intimate bonded engagement with the cylindrical outer surface of the multi-component elongated structure to form a multilayer elongated length of material.

After the extrusion in method step D. and/or in method step F., the continuous elongated length of thermoplastic polymer or the multi-component elongated structure can be cooled by methods known to the skilled person.

The cutting in method step G. and the optional printing, coating, or post-treating of method step H. can be carried out in any way known and appearing suitable to the skilled person. Post-treating can comprise, for example, surface treatments such as plasma treatment, corona treatment, or providing a lubricant to the surface of the closure.

All details disclosed herein for the closures according to the present disclosure are also relevant for the method according to the present disclosure and therefore also form part of the disclosure of the method disclosed herein.

The present disclosure also relates to a closure produced according to a method as described herein.

The closure produced according to the method described herein particularly has a leakage value measured according to the herein described test method of not more than 500 mm$^2$. If the product is packaged under inert conditions, the closure advantageously has an oxygen ingress rate of less than about 1 mg oxygen per container in the first 100 days after closing the container, whereby the oxygen ingress rate is advantageously selected from the group consisting of less than about 0.5 mg oxygen, less than about 0.25 mg oxygen, less than about 0.2 mg oxygen and less than about 0.1 mg oxygen, per container in the first 100 days after closing the container.

According to a further aspect of the closure produced according to the method according to the present disclosure, the closure comprises the peripheral layer surrounding and intimately bonded to the cylindrical surface of the core member and the end surfaces of the core member are devoid of said layer.

The present disclosure also relates to a use of a closure as disclosed herein or produced according to a method described herein for sealing closed a container.

The present disclosure also relates to a closure for a product-retaining container constructed for being inserted and securely retained in a portal forming neck of said container as described in claim 17. Said closure comprising at least

    a) a core member comprising at least one thermoplastic polymer, and
    b) at least one peripheral layer at least partially surrounding and intimately bonded to at least one surface of the core member,

wherein
the core member has a density in the range of from about 100 kg/m$^3$ to about 350 kg/m$^3$, particularly in the range of from about 120 kg/m$^3$ to about 320 kg/m$^3$, particularly in the range of from about 150 kg/m$^3$ to about 300 kg/m$^3$, particularly in the range of from about 180 kg/m$^3$ to about 290 kg/m$^3$, particularly in the range of from about 200 kg/m$^3$ to about 280 kg/m$^3$, particularly in the range of from about 200 kg/m$^3$ to about 270 kg/m$^3$, particularly in the range of from about 220 kg/m$^3$ to about 270 kg/m$^3$, or in the range of from about 225 kg/m$^3$ to about 265 kg/m$^3$, or in the range of from about 225 kg/m$^3$ to about 250 kg/m$^3$, and the closure has a leakage value measured according to the herein described test method of not more than 900 mm$^2$, particularly of not more than 800 mm$^2$, particularly of not more than 700 mm$^2$, particularly of not more than 600 mm$^2$, particularly of not more than 500 mm$^2$, particularly of not more than 400 mm$^2$, particularly of not more than 300 mm$^2$.

The present disclosure also relates to a closure for a product-retaining container constructed for being inserted and securely retained in a portal forming neck of said container, said closure comprising at least

    a) a core member comprising at least one thermoplastic polymer, and
    b) at least one peripheral layer at least partially surrounding and intimately bonded to at least one surface of the core member,

wherein
the core member has a density in the range of from about 100 kg/m$^3$ to about 350 kg/m$^3$, particularly in the range of from about 120 kg/m$^3$ to about 320 kg/m$^3$, particularly in the range of from about 150 kg/m$^3$ to about 300 kg/m$^3$, particularly in the range of from about 180 kg/m$^3$ to about 290 kg/m$^3$, particularly in the range of from about 200 kg/m$^3$ to about 280 kg/m$^3$, particularly in the range of from about 200 kg/m$^3$ to about 270 kg/m$^3$, particularly in the range of from about 220 kg/m$^3$ to about 270 kg/m$^3$, or in the range of from about 225 kg/m$^3$ to about 265 kg/m$^3$, or in the range of from about 225 kg/m$^3$ to about 250 kg/m$^3$, and the closure has a leakage value measured according to the herein described test method of not more than 500 mm$^2$, particularly of not more than 400 mm$^2$, particularly of not more than 300 mm$^2$.

The closure according to these aspects of the present disclosure can have a peripheral layer with a thickness in the range of from 0.15 mm to less than 0.5 mm, particularly in the range of from 0.20 mm to about 0.45 mm, particularly in the range of from about 0.25 mm to about 0.45 mm, more particularly in the range of from about 0.25 mm to about 0.45 mm, more particularly in the range of from about 0.30 mm to about 0.45 mm, more particularly in the range of from about 0.35 mm to about 0.45 mm, whereby exemplary thicknesses are about 0.15 mm, about 0.16 mm, about 0.17 mm, about 0.18 mm, about 0.19 mm, about 0.20 mm, about 0.21 mm, about 0.22 mm, about 0.23 mm, about 0.24 mm, about 0.25 mm, about 0.26 mm, about 0.27 mm, about 0.28 mm, about 0.29 mm, about 0.30 mm, about 0.31 mm, about 0.32 mm, about 0.33 mm, about 0.34 mm, about 0.35 mm, about 0.36 mm, about 0.37 mm, about 0.38 mm, about 0.39 mm, about 0.40 mm, about 0.41 mm, about 0.42 mm, about 0.43 mm, about 0.44 mm, about 0.45 mm, about 0.46 mm, about 0.47 mm, about 0.48 mm, or about 0.49 mm, whereby any one of these values can be taken as lower limit in combination with any other larger value as upper limit of an exemplary range according to the present disclosure.

All details given in the present disclosure relating to the closures disclosed herein, to their properties, as well as relating to their production and their uses, also apply to the closures according to these aspects of the disclosure.

According to the present disclosure, a closure can be realized which is capable of providing at least one, particularly more than one, particularly almost all or even all of the needs imposed thereupon by the wine industry, as well as any other bottle closure/packaging industry. As a result, a synthetic bottle closure can be attained that can be employed for completely sealing and closing a desired bottle for securely and safely storing the product retained therein, optionally with desired markings and/or indicia printed thereon.

The present disclosure accordingly comprises an article of manufacture possessing the features, properties, and relation of elements which will be exemplified in the article herein described, and the scope of the present disclosure will be indicated in the claims.

THE DRAWINGS

For a fuller understanding of the nature and objects of the present disclosure herein described, reference should be had to the following detailed description taken in connection with the accompanying drawings, in which:

FIGURE 1 is a perspective view of a synthetic closure according to an aspect of the present disclosure;
FIGURE 2 is a cross sectional-side elevation of a synthetic closure according to an aspect of the present disclosure;
FIGURE 3 is a schematic depiction of the jaws of a bottling machine which have been adjusted in order to misalign the jaws, before compression;
FIGURE 4 is a schematic depiction of the jaws of a bottling machine which have been adjusted in order to misalign the jaws, during compression;
FIGURE 5 is a schematic depiction of a jaw of a bottling machine showing the assembling screws;
FIGURE 6 shows schematically particular steps of the skin adhesion test method.

By referring to the FIGURES, along with the following detailed disclosure, the construction and production method for the synthetic closures of the present disclosure can best be understood. In these Figures, as well as in the detailed disclosure herein, the synthetic closure of the present disclosure, and its method of production, is depicted and discussed as a bottle closure for wine products. However, as detailed herein, the present disclosure is applicable as a synthetic closure for use in sealing and retaining any desired product in any desired closure system. However, due to the stringent and difficult demands placed upon closures for wine products, the detailed disclosure herein focuses upon the applicability of the synthetic bottle closures of the present disclosure as a closure for wine bottles. However, it is to be understood that this detailed discussion is provided merely for exemplary purposes and is not intended to limit the present disclosure to this particular application and embodiment.

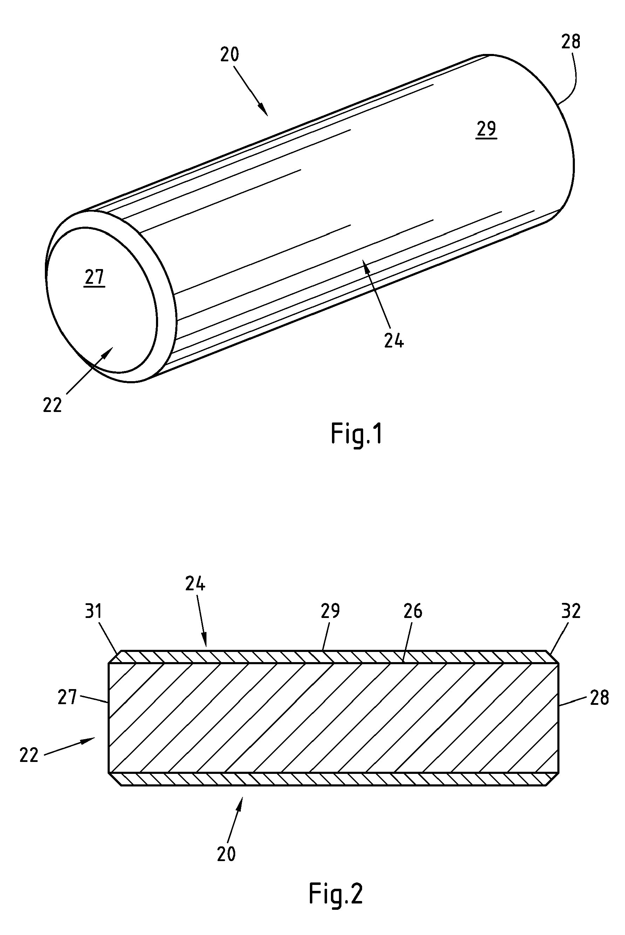

In FIGURES 1 and 2, the exemplary construction of a synthetic closure 20 is depicted comprising a generally cylindrical shape formed by core member 22 and peripheral layer 24 which peripherally surrounds and is intimately bonded to core member 22. In the exemplary aspect, core member 22 comprises a substantially cylindrically shaped surface 26, terminating with substantially flat end surfaces 27 and 28. Whenever applicable, the following detailed description of a synthetic closure having a layered structure, i.e. a core member and a peripheral layer, shall also apply to multilayer closures having more than one peripheral layer.

In an exemplary aspect, peripheral layer 24 is intimately bonded directly to core member 22, peripherally surrounding and enveloping surface 26 of core member 22. Peripheral layer 24 incorporates exposed surface 29, which comprises a substantially cylindrical shape and forms the outer surface of synthetic bottle closure 20 of the present disclosure, along with surfaces 27 and 28 of the substantially flat terminating ends.

In order to assist in assuring entry of synthetic bottle closure 20 into the portal of the bottle into which closure 20 is inserted, terminating edge 31 of peripheral layer 24 may be beveled or chamfered. Similarly, terminating edge 32 of peripheral layer 24 also may comprise a similar bevel or chamfer. Although any desired bevel or chamfered configuration can be employed, such as a radius, curve, or flat surface, it has been found that by merely cutting ends 31 and 32 with an angle of about 45° or about 60° the desired reduced diameter area is provided for achieving the desired effect.

By incorporating chamfered or beveled ends 31 and 32 on synthetic bottle closure 20, automatic self-centering is attained. As a result, when synthetic bottle closure 20 is compressed and ejected from the compression jaws into the open bottle for forming the closure thereof, synthetic bottle closure 20 is automatically guided into the bottle opening, even if the clamping jaws are slightly misaligned with the portal of the bottle. By employing this configuration, unwanted difficulties in inserting bottle closure 20 into any desired bottle are obviated. However, in applications which employ alternate stopper insertion techniques, chamfering of ends 31 and 32 may not be needed. Further, in order to facilitate the insertion of the closure into the bottle neck, the outer surface can fully or partly be coated with suitable lubricants, in particular with silicones. Coating with lubricants such as silicones can be effected by a variety of techniques known in the art, including tumbling and/or extrusion coating.

In order to produce the attributes suitable for use in the wine industry, core 22 is formed from foam plastic material as described herein using a continuous extrusion process. Although other prior art systems have employed molded foamed plastic material, these processes have proven to be more costly and incapable of providing a final product with the attributes of the present disclosure.

In order to demonstrate the efficacy of the present disclosure, samples of synthetic bottle closures 20, manufactured in accordance with the present disclosure and having a foamed core member and a solid peripheral layer were produced and tested.

**Test Methods**

The tests for extraction force and compression recovery were carried out on a random sample selection according to the methods described in WO 03/018304 A1 (compression test, p. 45, 1. 9 - p. 48, 1. 12; extraction test, p. 48,1. 13 - p. 49, 1. 10), which are herewith incorporated and form part of the present disclosure.

Extraction force

Six clean "Bordeaux" style wine bottles were filled with wine to the 20 °C fill mark using a 63 mm fill gauge. The inside of the bottlenecks was dried with a paper towel to remove wine splashes. The closures were inserted into the bottles using a semi-automatic corking machine (Model 4040 from GAI S.p.A., Italy). Insertion was carried out under a vacuum of less than -20 mm Hg, as read on the corking machine's vacuum gauge. There was approximately 17 mm ullage after insertion of the closures. The bottles were stored for 48 - 72 hours. The closures were then extracted at ambient temperature using a Dillon AFG-1000N force gauge (from Dillon/Quality Plus, Inc., USA) to measure the force required for extraction.

Instantaneous diameter and compression recovery

The instantaneous diameter is determined using an optical micrometer (Keyence 7650 and DATAQ 158-U Analog to Digital converter) positioned at the outlet of the corking machine, which measures the diameter of the closure immediately after the closure has exited the corking machine into the bottle. The percent recovery (compression recovery) can be calculated based on the original, uncompressed diameter of the closure and the diameter measured as for instantaneous diameter, but at two minutes after the closure has been compressed and exited the corking machine into the bottle, according to the equation:

$$\% \text{ recovery} = (\text{diameter at 2 minutes post-compression / original diameter}) \times 100.$$

Leakage

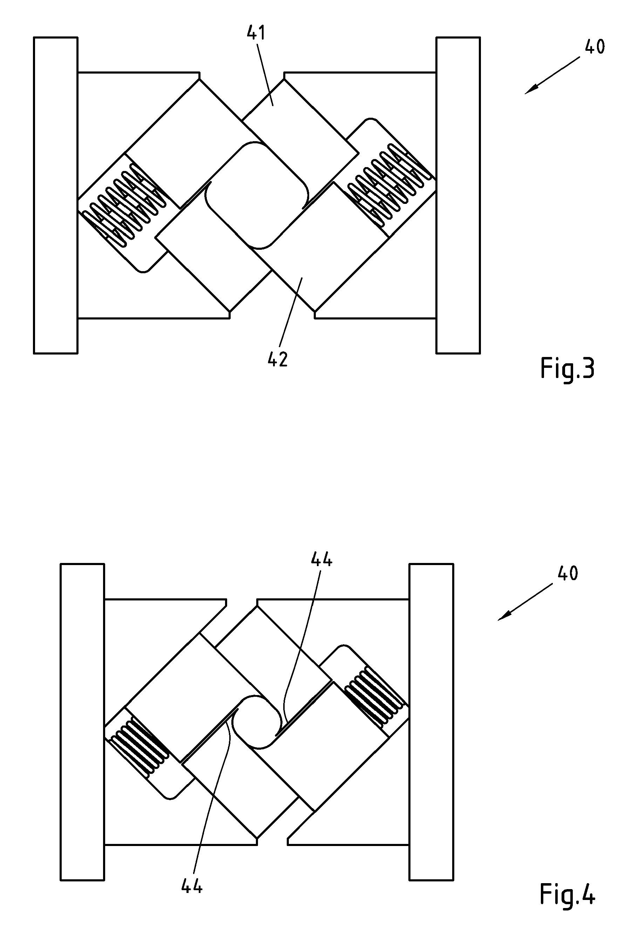

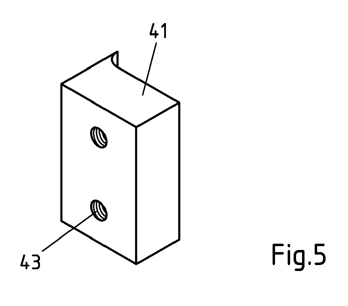

A Monobloc Comet 200 Multi bottling machine, manufactured by Costral S.A. (Riquewihr, France) was used in the tests. The line speed was 2025 bottles/hour, the program selected was Liege 4 and the compression diameter was 15 mm. The fill level was set to 63 mm and checked throughout the test. By reference to Figures 3 to 5, the compression jaws 40 (two fixed jaws 41 and two mobile jaws 42) were adjusted by tightening the assembling screws 43 in order to set a gap 44 of 0.2 mm between the mobile 42 and the fixed jaws 41. This gap 44 mimics the wear observed on industrial bottling machines after many hours of working without adjustment. Such wear is a typical source of damage to closures which can cause leakage. In all other respects the bottling machine was operated according to the operating instructions. Bottle racks were prepared with white folded paper towel at the bottom. Clean 750 ml bottles were prepared. The filling hopper was filled with red wine at ambient temperature, about 22 °C. The bottles were filled and corked without vacuum, using closures and comparative closures as described below. Directly after bottling and corking the bottleneck was wiped to remove any wine splash. The bottles were placed upside down in the bottle rack for 30 minutes, then removed from the bottle rack. If any red wine spot or spots were visible on the white paper towel, this leakage area was measured as follows: it is assumed that the leakage areas are ellipses. The smallest (di) and the largest (Di) diameters are measured in mm. The total leakage area is calculated according to formula (I):

$$Area = \Pi \ast \Sigma(Di \ast di)/4 \qquad (I)$$

Nine closures were used per sample lot, and the average values determined. In addition, a control lot was systematically tested at the end of each measurement session.

Skin Adhesion (peel force)

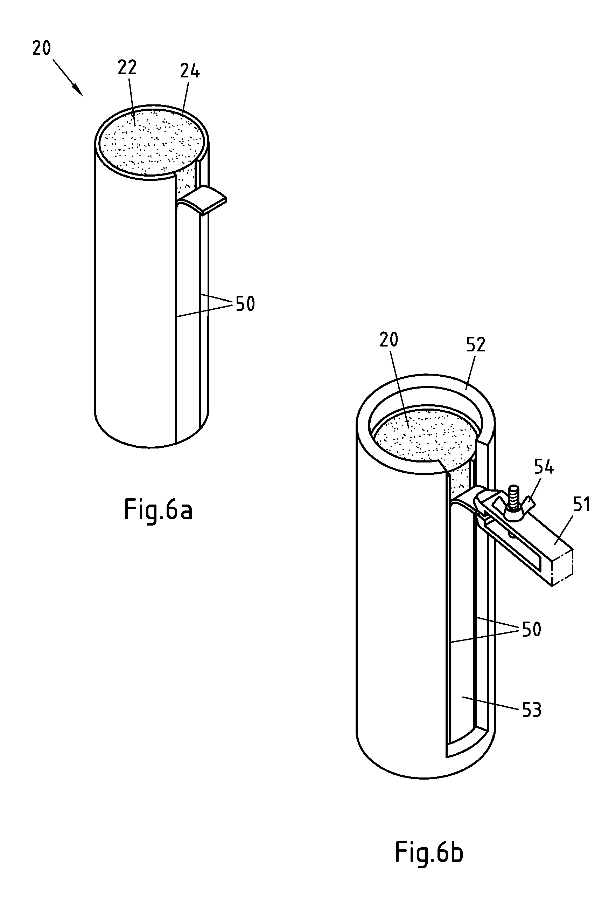

This test provides a measure of the strength of adhesion of the peripheral layer to the core. Reference is made to Fig. 6. A closure 20 to be tested is scored along the length of the closure parallel to the longitudinal axis thereof, with two parallel cuts 50 at a distance of approx. 8 mm from each other, to a depth equating approximately to the thickness of peripheral layer 24. The cuts are made using a tool having two parallel blades in order to maintain the same distance between the two cuts along the length of the closure. A 5-10 mm portion of peripheral layer 24 is then peeled away from core 22 without detaching, as shown in Fig. 6 a). A clamp 51 is attached to an Tinius Olsen force gauge (Model H5KS, from Tinium Olsen, Horsham, PA, USA) or to an Imada force gauge (Model DS2, equipped with a MV 220 motorised test stand and a RS-232 connection kit) and the force gauge zeroed (not depicted in the Figure). The speed is set to 300 mm/minute. The closure 20 is placed in cork holder 52 with the cut lines 50 aligned within the open area 53 of cork holder 52. The peeled portion of peripheral layer 24 is then held firmly in clamp 51, with the clamp wing nut 54 pointing upwards (Fig. 6 b)), and the measurement is started. The measurement is stopped either when the entire strip of peripheral layer 24 has been peeled off or when the force gauge stops moving. The test is repeated two more times at different positions for the same closure. At least two closures are tested, giving in total at least six measurements. Each measurement gives up to 200 or more pieces of data, which are averaged for each reading, to give individual averages for each measurement. An average value is then calculated based on these individual averages. A larger value indicates a better adhesion of peripheral layer 24 to core 22.

Example 1

The sample products were produced on conventional co-extrusion equipment. Core member 22 was produced by employing low density polyethylene (LDPE) using an inert gas as physical blowing agent. The degree of foaming was adjusted so as to produce samples having a density of 231 kg/m$^3$ (0.231 g/cm$^3$), 241 kg/m$^3$ (0.241 g/cm$^3$) or 261 kg/m$^3$ (0.261 g/cm$^3$). In forming peripheral layer 24, a mixture of varying amounts of Maxelast$^®$ D01-048E (SEBS polymer from Nantong Polymax Elastomer Technology Co., Ltd) and Dow Affinity 8200 (metallocene polyethylene polymer from Dow Chemical Company) was employed. Each polymer component of the peripheral layer was supplied to a separate reservoir and fed directly from this reservoir to the extrusion equipment, where the respective peripheral layer polymer components were blended with each other and extruded. In the forming process, peripheral layer 24 was formed in the extrusion equipment peripherally surrounding core member 22 and being intimately bonded thereto. The resulting products were cut into lengths suitable for forming bottle closure 20, followed by a chamfer being formed in edges 31 and 32. The resulting closures had a diameter of 22.5 mm or of 23 mm and a length of 37 mm. The Mocon test (OTR measurement system using 100 % oxygen) showed that the oxygen transfer rate of the respective closures was not affected by the materials of the peripheral layer.

For comparison, samples were prepared in an identical manner, with the differences that in forming peripheral layer 24, a mixture of EPDM and PP and metallocene PE was employed, referred to as TPV. The details of the products and the comparative products are shown in Table 1. The product numbers in Table 2 refer to the product numbers as defined in Table 1.

Table 1

| Product No. | Core Density (g/cm$^3$) | Peripheral Layer Composition (wt.%) | | | Peripheral layer thickness (mm) |
|---|---|---|---|---|---|
| | | Maxel ast | Dow 8200 | TPV | |
| 1 (comp.) | 0.231 | 0 | 0 | 100 | 0.5 |
| 2 | 0.231 | 100 | 0 | 0 | 0.4 |
| 3 | 0.231 | 95 | 5 | 0 | 0.4 |
| 4 | 0.231 | 90 | 10 | 0 | 0.4 |
| 5 | 0.231 | 90 | 10 | 0 | 0.3 |

(continued)

| Product No. | Core Density (g/cm$^3$) | Peripheral Layer Composition (wt.%) | | | Peripheral layer thickness (mm) |
|---|---|---|---|---|---|
| | | Maxel ast | Dow 8200 | TPV | |
| 6 | 0.231 | 85 | 15 | 0 | 0.4 |
| 7 | 0.231 | 85 | 15 | 0 | 0.3 |
| 8 | 0.231 | 75 | 25 | 0 | 0.4 |
| 9 | 0.231 | 50 | 50 | 0 | 0.4 |
| 10 (comp.) | 0.241 | 0 | 0 | 100 | 0.5 |
| 11 | 0.241 | 75 | 25 | 0 | 0.4 |
| 12 (comp.) | 0.261 | 0 | 0 | 100 | 0.6 |
| 13 | 0.261 | 75 | 25 | 0 | 0.4 |
| 14 | 0.261 | 75 | 25 | 0 | 0.5 |

Example 2

Samples were tested for the properties of extraction force, compression recovery, skin adhesion and leakage. The comparative closures were subjected to the same tests as the closures according to the present disclosure. The results of the tests are shown in Table 2.

Table 2

| Product No. | Inst. Diameter (mm) | % Recovery | Average extraction force (N) | Leakage (mm$^2$) | Skin adhesion (N) |
|---|---|---|---|---|---|
| 1 (comp.) | 19.5 | 96.6 | 269 | 500 | 11.5 |
| 2 | 19.3 | 96.3 | 268 | 100 | 5.6 |
| 3 | 19.3 | 96.9 | n.d.[+] | 100 | 7.5 |
| 4 | 19.3 | 96.3 | n.d.[+] | 100 | 7 |
| 5 | 19.3 | 96.3 | n.d.[+] | 100 | 6.3 |
| 6 | n.d.[+] | n.d.[+] | n.d.[+] | 200 | n.d.[+] |
| 7 | n.d.[+] | n.d.[+] | n.d.[+] | 300 | n.d.[+] |
| 8 | 19.4 | 97.1 | 276 | 200 | n.d.[+] |
| 9 | 19.8 | 97.1 | 287 | 200 | 10.4 |
| 10 (comp.) | n.d.[+] | n.d.[+] | n.d.[+] | 200 | n.d.[+] |
| 11 | n.d.[+] | n.d.[+] | n.d.[+] | 100 | n.d.[+] |
| 12 (comp.) | n.d.[+] | n.d.[+] | n.d.[+] | 100 | n.d.[+] |
| 13 | n.d.[+] | n.d.[+] | n.d.[+] | 100 | n.d.[+] |
| 14 | n.d.[+] | n.d.[+] | n.d.[+] | 0 | n.d.[+] |
| [+]n.d. = not determined | | | | | |

Is is expected that leakage values improve (decrease) with increased core density. Surprisingly, the leakage values can be improved with the closures according to the disclosure, compared to known closures, even with a thinner peripheral layer, without impairment or even with improvement of other performance properties of the closure such as extraction force, compression recovery and instantaneous diameter. The diameter recovery and the adhesion of the peripheral layer to the core can be improved by including a proportion of metallocene catalyst polyolefin in the peripheral layer composition.

It can thus be seen that the samples prepared according to the present disclosure have significantly better resistance to bottling conditions, as measured by the test methods desribed herein, in particular as measured by the amount of leakage, compared to the comparative samples, without significantly worsening or even with improvement in other performance properties measured. It is thus possible, using the present disclosure, to reduce the overall amount of materials in a closure, by reducing core densities and/or the thickness of the peripheral layer, while maintaining or even improving performance properties of the closure.

It will thus be seen that the needs set forth above, among those made apparent from the preceding description, are efficiently obtained and, since certain changes may be made in carrying out the above method without departing from the scope of this disclosure, it is intended that all matter contained in the above description or shown in the accompanying drawings shall be interpreted as illustrative and not in a limiting sense. Furthermore, it should be understood that the details of the disclosure described in the foregoing detailed description are not limited to the specific embodiments shown in the drawings but are rather meant to apply to the present disclosure in general as outlined in the summary of the present disclosure and in the claims.

It is also to be understood that the following claims are intended to cover all of the generic and specific features of the present disclosure herein described, and all statements of the scope of the present disclosure which, as a matter of language, might be said to fall there between.

**Claims**

1. A closure (20) for a product-retaining container constructed for being inserted and securely retained in a portal forming neck of said container, said closure (20) comprising at least

   a) a core member (22) comprising at least one thermoplastic polymer, and
   b) at least one peripheral layer (24) at least partially surrounding and intimately bonded to at least one surface of the core member (22), said peripheral layer (24) comprising at least one styrene block co-polymer,

   wherein

   the core member (22) has a density in the range of from about 100 kg/m$^3$ to 350 kg/m$^3$ and the peripheral layer (24) has a density in the range of from greater than 350 kg/m$^3$ to about 1,500 kg/m$^3$ and a thickness in the range of from 0.15 mm to less than 0.50 mm, **characterized in that** the peripheral layer (24) further comprises at least one further polymer or copolymer different to the at least one styrene block copolymer, wherein the at least one styrene block copolymer is present in an amount in the range of from about 15 wt.% to about 88 wt.%, based on the total weight of the peripheral layer (24), and the at least one further polymer and/or at least one further copolymer is or are present in an amount in the range of from 12 wt.% to about 85 wt.%, based on the total weight of the at least one styrene block copolymer and the at least one further polymer and/or the at least one further copolymer.

2. The closure (20) according to any one of the preceding claims, wherein the at least one thermoplastic polymer of the core member (22) is different to the at least one styrene block copolymer of the at least one peripheral layer (24).

3. The closure (20) according to claim 1 or claim 2, wherein the at least one styrene block copolymer is selected from the group consisting of styrene ethylene butadiene styrene block copolymers, styrene ethylene butylene styrene block copolymers, styrene ethylene butylene block copolymers, styrene butadiene styrene block copolymers, styrene butadiene block copolymers, styrene isoprene styrene block copolymers, styrene isobutylene block copolymers, styrene isoprene block copolymers, styrene ethylene propylene styrene block copolymers, styrene ethylene propylene block copolymers and combinations of two or more thereof.

4. The closure (20) according to any one of the preceding claims, wherein at least one further polymer or copolymer different to the at least one styrene block copolymer is at least one thermoplastic elastomer selected from the group consisting of thermoplastic polyolefins, thermoplastic polyurethanes, thermoplastic polyamides, thermoplastic copolyesters and thermoplastic vulcanisates.

5. The closure (20) according to any one of the preceding claims, having one or more of an extraction force determined according to the test method described in paragraph [130] of the description of not more than 400 N, an oxygen transfer rate (OTR) in axial direction as determined by Mocon measurement using 100% oxygen of from about 0.0001 to about 0.1000 cc/day/closure, in particular from about 0.0005 to about 0.050 cc/day/closure, a leakage value measured according to the test method described in paragraph [134] of the description of not more than 900

mm$^2$.

6. The closure (20) according to any one of the preceding claims, wherein the core member (22) has a density in the range of from about 100 kg/m$^3$ to less than 235 kg/m$^3$ and the closure has a leakage value measured according to the test method described in paragraph [134] of the description of not more than 900 mm$^2$, or the core member (22) has a density in the range of from 235 kg/m$^3$ to 260 kg/m$^3$ and the closure (20) has a leakage value measured according to the test method described in paragraph [134] of the description of not more than 300 mm$^2$, or the core member (22) has a density in the range of from greater than 260 kg/m$^3$ to 350 kg/m$^3$ and the closure (20) has a leakage value measured according to the test described in paragraph [134] of the description method of not more than 200 mn$^2$.

7. The closure (20) according to any one of the preceding claims, wherein the core member (22) comprises a plurality of cells, optionally wherein at least one of the size and the distribution of the plurality of cells in the core member is substantially uniform throughout at least one of the length and the diameter of the core member (22), optionally wherein the plurality of cells is a plurality of substantially closed cells, optionally wherein the plurality of cells comprises a cell size in a range of from about 0.025 mm to about 0.5 mm, in particular from about 0.05 mm to about 0.35 mm.

8. The closure (20) according to any one of the preceding claims, wherein said core member (22) comprises at least one of closed cells having an average cell size ranging from about 0.02 millimeters to about 0.50 millimeters and a cell density ranging from about 8,000 cells/cm$^3$ to about 25,000,000 cells/cm$^3$, in particular wherein said core member (22) comprises at least one of an average cell size ranging from about 0.05 mm to about 0.1 mm and a cell density ranging from about 1,000,000 cells/cm$^3$ to about 8,000,000 cells/cm$^3$.

9. The closure (20) according to any of the preceding claims, wherein said closure (20) has a substantially cylindrical shape comprising substantially flat terminating surfaces (27, 28) forming the opposed ends of said closure and the substantially flat terminating surfaces (27, 28) of the core member (22) are substantially devoid of the peripheral layer (24).

10. The closure (20) according to any one of the preceding claims, wherein the core member (22) comprises at least one thermoplastic polymer selected from the group consisting of polyethylenes, metallocene catalyst polyethylenes, polybutanes, polybutylenes, polyurethanes, silicones, vinyl-based resins, thermoplastic elastomers, polyesters, ethylenic acrylic copolymers, ethylene-vinyl-acetate copolymers, ethylene-methyl-acrylate copolymers, thermoplastic polyurethanes, thermoplastic olefins, thermoplastic vulcanizates, flexible polyolefins, fluorelastomers, fluoropolymers, polyethylenes, polytetrafluoroethylenes, and blends thereof, ethylene-butyl-acrylate copolymers, ethylene-propylene-rubber, styrene butadiene rubber, styrene butadiene block copolymers, ethylene-ethyl-acrylic copolymers, ionomers, polypropylenes, and copolymers of polypropylene and copolymerizable ethylenically unsaturated comonomers, olefin copolymers, olefin block copolymers and mixtures thereof.

11. The closure (20) according to any one of the preceding claims having an overall density of from about 100 kg/m$^3$ to about 800 kg/m$^3$, in particular from about 200 kg/m$^3$ to about 500 kg/m$^3$.

12. The closure (20) according to any one of the preceding claims, wherein said closure (20) is formed by extrusion.

13. The closure (20) according to claim 12, wherein said core member (22) and said peripheral layer (24) are extruded substantially simultaneously or said core member (22) is extruded separately and subsequent thereto said peripheral layer (24) is formed in extrusion equipment peripherally surrounding and enveloping the pre-formed core member (22).

14. A method for producing a closure (20) according to any one of claims 1 to 13, said method comprising at least the steps of:

    A. providing a first composition comprising at least one thermoplastic polymer;
    B. optionally providing at least one blowing agent to the composition comprising at least one thermoplastic polymer to obtain a composition comprising at least one thermoplastic polymer and at least one blowing agent;
    C. at least one of before, during and after method step B., heating the composition provided in method step A. or the composition obtained in method step B. to obtain a heated composition;
    D. extruding a continuous, elongated, substantially cylindrically shaped length of the heated composition obtained in method step C. to obtain, as core member (22), a continuous elongated length of thermoplastic polymer having a cylindrical surface;

E. providing a second composition comprising at least one styrene block copolymer and at least one further polymer or copolymer different to the at least one styrene block copolymer, wherein the at least one styrene block copolymer is present in an amount in the range of from about 1 wt.% to about 99 wt.%, based on the total weight of the peripheral layer, and the at least one further polymer and/or at least one further copolymer is or are present in an amount in the range of from 1 wt.% to about 99 wt.%, based on the total weight of the at least one styrene block copolymer and the at least one further polymer and/or the at least one further copolymer;

F. extruding a separate and independent peripheral layer (24) of the composition provided in method step E. separately to, co-axially to and in intimate bonded engagement with the continuous, elongated length of thermoplastic polymer obtained in method step D., said separate and independent peripheral layer (24) peripherally surrounding and substantially enveloping the cylindrical surface of the continuous, elongated length of thermoplastic polymer to obtain a multi-component elongated structure having a cylindrical surface;

G. cutting the multi-component elongated structure obtained in method step F. in a plane substantially perpendicular to the central axis of said multi-component elongated structure to obtain a closure (20);

H. optionally printing, coating, or post-treating at least one of the continuous elongated length of thermoplastic polymer obtained in method step D., the multi-component structure obtained in method step F. and the closure (20) obtained in method step G.

15. A closure (20) produced according to a method according to claim 14, wherein said closure (20) has a leakage value measured according to the test method described in paragraph [134] of the description of not more than 900 mm$^2$.

16. Use of a closure (20) according to any one of claims 1 to 13 or 15 for sealing closed a container.

17. A closure (20) for a product-retaining container constructed for being inserted and securely retained in a portal forming neck of said container, said closure comprising at least

a) a core member (22) comprising at least one thermoplastic polymer, and
b) at least one peripheral layer (24) at least partially surrounding and intimately bonded to at least one surface of the core member (22),

wherein the core member (22) has a density in the range of from about 100 kg/m$^3$ to about 350 kg/m$^3$, **characterized in that** the peripheral layer (24) comprises at least one styrene block co-polymer in an amount in the range of from about 15 wt.% to about 88 wt.%, and at least one further polymer and /or at least one further co-polymer, in an amount in the range of from about 12 wt.% to about 85 wt.% in each case based on the total weight of the at least one styrene block copolymer and the at the least one further polymer and/or the at least one further copolymer, and the closure (20) has a leakage value measured according to the test method described in paragraph [134] of the description of not more than 900 mm$^2$.

18. The closure (20) according to claim 17, wherein the closure (20) has a leakage value measured according to the test method described in paragraph [134] of the description of not more than 500 mm$^2$.

**Patentansprüche**

1. Verschluss (20) für einen ein Produkt enthaltenden Behälter, welcher so gestaltet ist, dass er in einen eine Öffnung bildenden Hals des Behälters hineingesteckt und dort sicher festgehalten wird, wobei dieser Verschluss (20) wenigstens:

a) einen Kernteil (22), der mindestens ein thermoplastisches Polymer umfasst, und
b) mindestens eine periphere Schicht (24), die mindestens eine Fläche des Kernteils (22) wenigstens teilweise umgibt und mit dieser innig verbunden ist, umfasst, wobei diese periphere Schicht (24) mindestens ein Styrol-Blockcopolymer umfasst,

und

der Kernteil (22) eine Dichte im Bereich von etwa 100 kg/m$^3$ bis 350 kg/m$^3$ und die periphere Schicht (24) eine Dichte im Bereich von mehr als 350 kg/m$^3$ bis etwa 1 500 kg/m$^3$ und eine Dicke im Bereich von 0,15 mm bis weniger als 0,50 mm besitzt, **dadurch gekennzeichnet, dass** die periphere Schicht (24) ferner mindestens ein weiteres Polymer oder Copolymer umfasst, das ein anderes als das mindestens eine Styrol-Blockcopolymer ist, wobei das mindestens eine Styrol-Blockcopolymer in einer Menge im Bereich von etwa 15 Gew.-% bis etwa 88 Gew.-%, bezogen auf das Gesamtgewicht der peripheren Schicht (24), vorhanden ist und das mindestens eine weitere Polymer und/oder mindestens eine weitere Copolymer in einer Menge im Bereich von 12 Gew.-% bis etwa 85 Gew.-%, bezogen auf das Gesamtgewicht aus dem mindestens einen Styrol-Blockcopolymer und dem mindestens einen weiteren Polymer und/oder mindestens einem weiteren Copolymer, vorhanden ist/sind.

2.  Verschluss (20) nach einem der vorhergehenden Ansprüche, wobei das mindestens eine thermoplastische Polymer des Kernteils (22) verschieden von dem mindestens einen Styrol-Blockcopolymer der mindestens einen peripheren Schicht (24) ist.

3.  Verschluss (20) nach Anspruch 1 oder 2, wobei das mindestens eine Styrol-Blockcopolymer aus der Gruppe ausgewählt ist, die aus Styrol-Ethylen-Butadien-Styrol-Blockcopolymeren, Styrol-Ethylen-Butylen-Styrol-Blockcopolymeren, Styrol-Ethylen-Butylen-Blockcopolymeren, Styrol-Butadien-Styrol-Blockcopolymeren, Styrol-Butadien-Blockcopolymeren, Styrol-Isopren-Styrol-Blockcopolymeren, Styrol-Isobutylen-Blockcopolymeren, Styrol-Isopren-Blockcopolymeren, Styrol-Ethylen-Propylen-Styrol-Blockcopolymeren, Styrol-Ethylen-Propylen-Blockcopolymeren und Kombinationen aus zwei oder mehr davon besteht.

4.  Verschluss (20) nach einem der vorhergehenden Ansprüche, wobei mindestens ein weiteres Polymer oder Copolymer, das von dem mindestens einen Styrol-Blockcopolymer verschieden ist, mindestens ein thermoplastisches Elastomer ist, das aus der Gruppe ausgewählt ist, die aus thermoplastischen Polyolefinen, thermoplastischen Polyurethanen, thermoplastischen Polyamiden, thermoplastischen Copolyestern und thermoplastischen Vulkanisaten besteht.

5.  Verschluss (20) nach einem der vorhergehenden Ansprüche, der eine/n oder mehrere von einer gemäß dem in Abschnitt 130 der Beschreibung erläuterten Prüfverfahren bestimmten Ausziehkraft von nicht höher als 400 N, einer durch die Mocon-Messung unter Verwendung von 100%igem Sauerstoff bestimmten Sauerstofftransferrate (OTR) in axialer Richtung von etwa 0,0001 bis etwa 0,1000 cm$^3$/Tag/Verschluss, insbesondere von etwa 0,0005 bis etwa 0,050 cm$^3$/Tag/Verschluss, und einem gemäß dem in Abschnitt 134 der Beschreibung erläuterten Prüfverfahren gemessenen Leckagewert von nicht größer als 900 mm$^2$ besitzt.

6.  Verschluss (20) nach einem der vorhergehenden Ansprüche, wobei:

    - der Kernteil (22) eine Dichte im Bereich von etwa 100 kg/m$^3$ bis weniger als 235 kg/m$^3$ und der Verschluss einen gemäß dem in Abschnitt 134 der Beschreibung erläuterten Prüfverfahren gemessenen Leckagewert von nicht größer als 900 mm$^2$ besitzt, oder
    - der Kernteil (22) eine Dichte im Bereich von 235 kg/m$^3$ bis 260 kg/m$^3$ und der Verschluss (20) einen gemäß dem in Abschnitt 134 der Beschreibung erläuterten Prüfverfahren gemessenen Leckagewert von nicht größer als 300 mm$^2$ besitzt, oder
    - der Kernteil (22) eine Dichte im Bereich von mehr als 260 kg/m$^3$ bis 350 kg/m$^3$ und der Verschluss (20) einen gemäß dem in Abschnitt 134 der Beschreibung erläuterten Prüfverfahren gemessenen Leckagewert von nicht größer als 200 mm$^2$ besitzt.

7.  Verschluss (20) nach einem der vorhergehenden Ansprüche, wobei der Kernteil (22) eine Vielzahl von Zellen umfasst, wobei wahlweise mindestens eine von Größe und Verteilung der Vielzahl von Zellen im Kernteil über mindestens eine/n von Länge und Durchmesser des Kernteils (22) im Wesentlichen einheitlich ist, wobei wahlweise die Vielzahl der Zellen eine Vielzahl von im Wesentlichen geschlossenen Zellen ist, wobei wahlweise die Vielzahl der Zellen eine Zellgröße im Bereich von etwa 0,025 mm bis etwa 0,5 mm, insbesondere von etwa 0,05 mm bis etwa 0,35 mm, umfasst.

8.  Verschluss (20) nach einem der vorhergehenden Ansprüche, wobei der Kernteil (22) mindestens eine von geschlossenen Zellen mit einer durchschnittlichen Zellgröße von etwa 0,02 Millimetern bis etwa 0,50 Millimeter und einer Zelldichte von etwa 8 000 Zellen/cm$^3$ bis etwa 25 000 000 Zellen/cm$^3$ umfasst, insbesondere, wobei dieser Kernteil (22) mindestens eine von einer durchschnittlichen Zellgröße von etwa 0,05 mm bis etwa 0,1 mm und einer Zelldichte von etwa 1 000 000 Zellen/cm$^3$ bis etwa 8 000 000 Zellen/cm$^3$ umfasst.

9.  Verschluss (20) nach einem der vorhergehenden Ansprüche, wobei der Verschluss (20) eine im Wesentlichen zylinderförmige Gestalt besitzt, die im Wesentlichen flache Endflächen (27, 28), welche die einander gegenüberliegenden Endes dieses Verschlusses bilden, umfasst, und die im Wesentlichen flachen Endflächen (27, 28) des Kernteils (22) im Wesentlichen frei von der peripheren Schicht (24) sind.

10. Verschluss (20) nach einem der vorhergehenden Ansprüche, wobei der Kernteil (22) mindestens ein thermoplastisches Polymer umfasst, das aus der Gruppe ausgewählt ist, die aus Polyethylenen, Metallocen-Katalysator-Polyethylenen, Polybutanen, Polybutylenen, Polyurethanen, Siliconen, auf Vinyl basierenden Harzen, thermoplastischen Elastomeren, Polyestern, ethylenischen Acrylcopolymeren, EthylenVinylacetat-Copolymeren, Ethylen-Methylacrylat-Copolymeren, thermoplastischen Polyurethanen, thermoplastischen Polyolefinen, thermoplastischen Vulkanisaten, flexiblen Polyolefinen, Fluorelastomeren, Fluorpolymeren, Polyethylenen, Polytetrafluorethylenen und Blends davon, Ethylen-Butylacrylat-Copolymeren, Ethylen-Propylen-Kautschuk, Styrol-Butadien-Kautschuk, Styrol-Butadien-Blockcopolymeren, Ethylen-Ethyl-Acryl-Copolymeren, Ionomeren, Polypropylenen und Copolymeren aus Polypropylen und copolymerisierbaren ethylenisch ungesättigten Comonomeren, Olefincopolymeren, Olefin-Blockcopolymeren und Mischungen davon besteht.

11. Verschluss (20) nach einem der vorhergehenden Ansprüche mit einer Gesamtdichte von etwa 100 kg/m$^3$ bis etwa 800 kg/m$^3$ und insbesondere von etwa 200 kg/m$^3$ bis etwa 500 kg/m$^3$.

12. Verschluss (20) nach einem der vorhergehenden Ansprüche, wobei dieser Verschluss (20) durch Extrudieren gebildet wird.

13. Verschluss (20) nach Anspruch 12, wobei der Kernteil (22) und die periphere Schicht (24) im Wesentlichen gleichzeitig extrudiert werden oder dieser Kernteil (22) getrennt extrudiert und anschließend darauf diese periphere Schicht (24), die den vorgeformten Kernteil (22) peripher umgibt und umhüllt, in einem Extruder gebildet wird.

14. Verfahren zur Herstellung eines Verschlusses (20) nach einem der Ansprüche 1 bis 13, welches wenigstens die Stufen:

A. Bereitstellen einer ersten Zusammensetzung, die mindestens ein thermoplastisches Polymer umfasst,
B. wahlweise Zugeben mindestens eines Blähmittels zu der mindestens ein thermoplastisches Polymer umfassenden Zusammensetzung, um eine mindestens ein thermoplastisches Polymer und mindestens ein Blähmittel umfassende Zusammensetzung zu erhalten,
C. mindestens eines von vor, während und nach der Verfahrensstufe B., Erwärmen der in Verfahrensstufe A. bereitgestellten Zusammensetzung oder der in Verfahrensstufe B. erhaltenen Zusammensetzung, um eine erwärmte Zusammensetzung zu erhalten,
D. Extrudieren einer kontinuierlichen, länglichen, im Wesentlichen zylinderförmigen Länge aus der in Verfahrensstufe C. erhaltenen erwärmten Zusammensetzung, um eine kontinuierliche längliche Länge aus thermoplastischem Polymer mit einer zylinderförmigen Oberfläche als Kernteil (22) zu erhalten,
E. Bereitstellen einer zweiten Zusammensetzung, die mindestens ein Styrol-Blockcopolymer und mindestens ein weiteres Polymer oder Copolymer, das von dem mindestens einen Styrol-Blockcopolymer verschieden ist, umfasst, wobei das mindestens eine Styrol-Blockcopolymer in einer Menge im Bereich von etwa 1 Gew.-% bis etwa 99 Gew.-%, bezogen auf das Gesamtgewicht der peripheren Schicht, vorhanden ist und das mindestens eine weitere Polymer und/oder mindestens eine weitere Copolymer in einer Menge im Bereich von 1 Gew.-% bis etwa 99 Gew.-%, bezogen auf das Gesamtgewicht aus dem mindestens einem Styrol-Blockcopolymer und dem mindestens einen weiteren Polymer und/oder dem mindestens einen weiteren Copolymer, vorhanden ist/sind,
F. Extrudieren einer separaten und unabhängigen peripheren Schicht (24) aus der in Verfahrensstufe E. bereitgestellten Zusammensetzung getrennt von, koaxial zu und in innig verbundenem Eingriff mit der in Verfahrensstufe D. erhaltenen kontinuierlichen, länglichen Länge aus thermoplastischem Polymer, wobei die separate und unabhängige periphere Schicht (24) die zylinderförmige Oberfläche der kontinuierlichen, länglichen Länge aus thermoplastischem Polymer peripher umgibt und im Wesentlichen umhüllt, um eine längliche Mehrkomponentenstruktur mit einer zylinderförmigen Oberfläche zu erhalten,
G. Zerschneiden der in Verfahrensstufe F. erhaltenen länglichen Mehrkomponentenstruktur in einer Ebene, die zur Mittelachse dieser länglichen Mehrkomponentenstruktur im Wesentlichen senkrecht verläuft, um einen Verschluss (20) zu erhalten,
H. wahlweise Bedrucken, Beschichten oder Nachbehandeln mindestens einer/eines von der in Verfahrensstufe D. erhaltenen kontinuierlichen länglichen Länge aus thermoplastischem Polymer, der in Verfahrensstufe F. erhaltenen Mehrkomponentenstruktur und dem in Verfahrensstufe G. erhaltenen Verschluss (20)

umfasst.

**15.** Verschluss (20), der gemäß einem Verfahren nach Anspruch 14 hergestellt worden ist, wobei der Verschluss (20) gemäß dem in Abschnitt 134 der Beschreibung erläuterten Prüfverfahren gemessenen Leckagewert von nicht größer als 900 mm$^2$ besitzt.

**16.** Verwendung eines Verschlusses (20) nach einem der Ansprüche 1 bis 13 oder 15 zum dichten Verschließen eines Behälters.

**17.** Verschluss (20) für einen ein Produkt enthaltenden Behälter, welcher so gestaltet ist, dass er in einen eine Öffnung bildenden Hals des Behälters hineingesteckt und dort sicher festgehalten wird, wobei dieser Verschluss wenigstens:

a) einen Kernteil (22), der mindestens ein thermoplastisches Polymer umfasst, und
b) mindestens eine periphere Schicht (24), die mindestens eine Fläche des Kernteils (22) wenigstens teilweise umgibt und mit dieser innig verbunden ist,

umfasst, wobei der Kernteil (22) eine Dichte im Bereich von etwa 100 kg/m$^3$ bis etwa 350 kg/m$^3$ besitzt, **dadurch gekennzeichnet, dass** die periphere Schicht (24) mindestens ein Styrol-Blockcopolymer in einer Menge im Bereich von etwa 15 Gew.-% bis etwa 88 Gew.-% und mindestens ein weiteres Polymer und/oder mindestens ein weiteres Copolymer in einer Menge im Bereich von etwa 12 Gew.-% bis etwa 85 Gew.-%, in jedem Fall bezogen auf das Gesamtgewicht aus dem mindestens einen Styrol-Blockcopolymer und dem mindestens einen weiteren Polymer und/oder mindestens einen weiteren Copolymer, umfasst und der Verschluss (20) einen gemäß dem in Abschnitt 134 der Beschreibung erläuterten Prüfverfahren gemessenen Leckagewert von nicht größer als 900 mm$^2$ besitzt.

**18.** Verschluss (20) nach Anspruch 17, wobei der Verschluss (20) einen gemäß dem in Abschnitt 134 der Beschreibung erläuterten Prüfverfahren gemessenen Leckagewert von nicht größer als 500 mm$^2$ besitzt.

## Revendications

**1.** Fermeture (20) pour un récipient retenant un produit, construite pour être introduite et retenue solidement dans un col faisant l'entrée dudit récipient, ladite fermeture (20) comprenant au moins :

a) un élément central (22) comprenant au moins un polymère thermoplastique, et
b) au moins une couche périphérique (24) entourant au moins en partie et intimement liée à au moins une surface de l'élément central (22), ladite couche périphérique (24) comprenant au moins un copolymère à blocs de styrène,

dans laquelle
l'élément central (22) a une densité dans l'intervalle allant d'environ 100 kg/m$^3$ à 350 kg/m$^3$ et la couche périphérique (24) a une densité dans l'intervalle allant de plus de 350 kg/m$^3$ à environ 1 500 kg/m$^3$ et une épaisseur dans l'intervalle allant de 0,15 mm à moins de 0,50 mm, **caractérisée en ce que** la couche périphérique (24) comprend en outre au moins un polymère ou copolymère supplémentaire différent dudit au moins un copolymère à blocs de styrène, dans laquelle ledit au moins un copolymère à blocs de styrène est présent dans une quantité dans l'intervalle allant d'environ 15 % en poids à environ 88 % en poids, relativement au poids total de la couche périphérique (24), et ledit au moins un polymère supplémentaire et/ou au moins un copolymère supplémentaire est ou sont présent(s) dans une quantité dans l'intervalle allant de 12 % en poids à environ 85 % en poids, relativement au poids total dudit au moins un copolymère à blocs de styrène et dudit au moins un polymère supplémentaire et/ou dudit au moins un copolymère supplémentaire.

**2.** Fermeture (20) selon l'une quelconque des revendications précédentes, dans laquelle ledit au moins un polymère thermoplastique de l'élément central (22) est différent dudit au moins un copolymère à blocs de styrène de ladite au moins une couche périphérique (24).

**3.** Fermeture (20) selon la revendication 1 ou la revendication 2, dans laquelle ledit au moins un copolymère à blocs de styrène est choisi permi le groupe consistant en des copolymères à blocs de styrène-éthylène-butadiène-styrène, des copolymères à blocs de styrène-éthylène-butylène-styrène, des copolymères à blocs de styrène-éthylène-butylène, des copolymères à blocs de styrène-butadiène-styrène, des copolymères à blocs de styrène-butadiène, des copolymères à blocs de styrène-isoprène-styrène, des copolymères à blocs de styrène-isobutylène, des copolymères à blocs de styrène-isoprène, des copolymères à blocs de styrène-éthylène-propylène-styrène, des copolymères à blocs de styrène-éthylène-propylène, et de combinaisons de deux ou plusieurs de ceux-ci.

4. Fermeture (20) selon l'une quelconque des revendications précédentes, dans laquelle au moins un polymère ou copolymère supplémentaire différent dudit au moins un copolymère à blocs de styrène est au moins un élastomère thermoplastique chisi permi le groupe consistant en des polyoléfines thermoplastiques, des polyuréthanes thermoplastiques, des polyamides thermoplastiques, des copolyesters thermoplastiques et des vulcanisats thermoplastiques.

5. Fermeture (20) selon l'une quelconque des revendications précédentes, présentant l'un(e) ou plusieurs d'une force d'extraction, déterminée selon la méthode d'essai décrite dans le paragraphe [130] de la description, ne dépassant pas 400 N, d'un taux de transfert de l'oxygène (TTO) dans la direction axiale, tel que déterminé par mesure Mocon en utilisant 100 % d'oxygène, d'environ 0,0001 à environ 0,1000 cc/jour/fermeture, en particulier d'environ 0,0005 à environ 0,050 cc/jour/fermeture, et d'une valeur de fuite, mesurée selon la méthode d'essai décrite dans le paragraphe [134] de la description, ne dépassant pas 900 mm$^2$.

6. Fermeture (20) selon l'une quelconque des revendications précédentes, dans laquelle l'élément central (22) a une densité dans l'intervalle allant d'environ 100 kg/m$^3$ à moins de 235 kg/m$^3$ et la fermeture a une valeur de fuite, mesurée selon la méthode d'essai décrite dans le paragraphe [134] de la description, ne dépassant pas 900 mm$^2$, ou l'élément central (22) a une densité dans l'intervalle allant de 235 kg/m$^3$ à 260 kg/m$^3$ et la fermeture (20) a une valeur de fuite, mesurée selon la méthode d'essai décrite dans le paragraphe [134] de la description, ne dépassant pas 300 mm$^2$, ou
l'élément central (22) a une densité dans l'intervalle allant de plus de 260 kg/m$^3$ à 350 kg/m$^3$ et la fermeture (20) a une valeur de fuite, mesurée selon la méthode d'essai décrite dans le paragraphe [134] de la description, ne dépassant pas 200 mm$^2$.

7. Fermeture (20) selon l'une quelconque des revendications précédentes, dans laquelle l'élément central (22) comprend une pluralité des cellules, optionnellement dans laquelle au moins l'une de la taille et de la distribution de la pluralité des cellules dans l'élément central est sensiblement uniforme à travers au moins l'un(e) de la longueur et du diamètre de l'élément central (22), optionnellement dans laquelle la pluralité des cellules est une pluralité des cellules sensiblement fermées, optionnellement dans laquelle la pluralité des cellules a une taille des cellules d'environ 0,025 mm à environ 0,5 mm, en particulier d'environ 0,05 mm à environ 0,35 mm.

8. Fermeture (20) selon l'une quelconque des revendications précédentes, dans laquelle ledit élément central (22) comprend au moins une caractéristique parmi des cellules fermées ayant une taille moyenne des cellules dans l'intervalle allant d'environ 0,02 mm à environ 0,50 mm et une densité des cellules d'environ 8 000 cellules/cm$^3$ à environ 25 000 000 cellules/cm$^3$, en particulier dans laquelle ledit élément central (22) comprend au moins une caractéristique parmi une taille moyenne de cellule dans l'intervalle allant d'environ 0,05 mm à environ 0,1 mm et une densité des cellules dans l'intervalle allant d'environ 1 000 000 cellules/cm$^3$ à environ 8 000 000 cellules/cm$^3$.

9. Fermeture (20) selon l'une quelconque des revendications précédentes, ladite fermeture (20) ayant une forme sensiblement cylindrique comprenant des surfaces terminales sensiblement plates (27, 28) formant les extrémités opposées de ladite fermeture et les surfaces terminales sensiblement plates (27, 28) de l'élément central (22) étant sensiblement dépourvues de la couche périphérique (24).

10. Fermeture (20) selon l'une quelconque des revendications précédentes, dans laquelle l'élément central (22) comprend au moins un polymère thermoplastique choisi permi le groupe consistant en des polyéthylènes, des polyéthylènes obtenus avec des catalyseurs métallocènes, des polybutanes, des polybutylènes, des polyuréthanes, des silicones, des résines à base de vinyle, des élastomères thermoplastiques, des polyesters, des copolymères acryliques éthyléniques, des copolymères d'éthylène-acétate de vinyle, des copolymères d'éthylène-acrylate de méthyle, des polyuréthanes thermoplastiques, des oléfines thermoplastiques, des vulcanisats thermoplastiques, des polyoléfines flexibles, des fluoroélastomères, des fluoropolymères, des polyéthylènes, des polytétrafluoroéthylènes, et de mélanges de ceux-ci, des copolymères d'éthylène-acrylate de butyle, du caoutchouc d'éthylène-propylène, du caoutchouc de styrène-butadiène, des copolymères à blocs de styrène-butadiène, des copolymères d'éthylène-acrylate d'éthyle, des ionomères, des polypropylènes, et des copolymères de polypropylène et de comonomères copolymérisables à insaturation éthylénique, des copolymères d'oléfines, des copolymères à blocs d'oléfines, et de mélanges de ceux-ci.

11. Fermeture (20) selon l'une quelconque des revendications précédentes, ayant une densité globale d'environ 100

kg/m$^3$ à environ 800 kg/m$^3$, en particulier d'environ 200 kg/m$^3$ à environ 500 kg/m$^3$.

**12.** Fermeture (20) selon l'une quelconque des revendications précédentes, ladite fermeture (20) étant formée par extrusion.

**13.** Fermeture (20) selon la revendication 12, dans laquelle ledit élément central (22) et ladite couche périphérique (24) sont extrudés de façon sensiblement simultanée, ou ledit élément central (22) est extrudé séparément, ladite couche périphérique (24) étant suite à cela formée dans l'équipement d'extrusion, entourant périphériquement et enveloppant l'élément central (22) préformé.

**14.** Procédé de fabrication d'une fermeture (20) selon l'une quelconque des revendications 1 à 13, ledit procédé comprenant au moins les étapes de ;

A. fournir une première composition comprenant au moins un polymère thermoplastique ;
B. optionnellement, fournir au moins un agent gonflant à la composition comprenant au moins un polymère thermoplastique pour obtenir une composition comprenant au moins un polymère thermoplastique et au moins un agent gonflant ;
C. au moins l'un de avant, durant et après l'étape B. du procédé, chauffer la composition fournie à l'étape A. du procédé ou la composition obtenue à l'étape B. du procédé pour obtenir une composition chauffée ;
D. extruder une longueur continue, allongée, de forme sensiblement cylindrique, de la composition chauffée obtenue à l'étape C. du procédé pour obtenir, comme élément central (22), une longueur continue et allongée de polymère thermoplastique ayant une surface cylindrique ;
E. fournir une deuxième composition comprenant au moins un copolymère à blocs de styrène et au moins un polymère ou copolymère supplémentaire différent dudit au moins un copolymère à blocs de styrène, dans laquelle ledit au moins un copolymère à blocs de styrène est présent dans une quantité dans l'intervalle allant d'environ 1 % en poids à environ 99 % en poids, relativement au poids total de la couche périphérique, et ledit au moins un polymère supplémentaire et/ou au moins un copolymère supplémentaire est ou sont présent(s) dans une quantité dans l'intervalle allant de 1 % en poids à environ 99 % en poids, relativement au poids total dudit au moins un copolymère à blocs de styrène et dudit au moins un polymère supplémentaire et/ou dudit au moins un copolymère supplémentaire ;
F. extruder une couche périphérique distincte et indépendante (24) de la composition fournie à l'étape E. du procédé, séparément de, coaxialement à, et intimement liée à la longueur continue et allongée de polymère thermoplastique obtenue à l'étape D. du procédé, ladite couche périphérique distincte et indépendante (24) entourant périphériquement et enveloppant sensiblement la surface cylindrique de la longueur continue et allongée du polymère thermoplastique pour obtenir une structure allongée à plusieurs constituants ayant une surface cylindrique ;
G. couper la structure allongée à plusieurs constituants obtenue à l'étape F. du procédé dans un plan sensiblement perpendiculaire à l'axe central de ladite structure allongée à plusieurs constituants pour obtenir une fermeture (20) ;
H. optionnellement imprimer, revêtir, ou soumettre à un post-traitement au moins l'une de la longueur allongée et continue de polymère thermoplastique obtenue à l'étape D. du procédé, de la structure à plusieurs constituants obtenue à l'étape F. du procédé, et de la fermeture (20) obtenue à l'étape G. du procédé.

**15.** Fermeture (20) produite par un procédé selon la revendication 14, ladite fermeture (20) ayant une valeur de fuite, mesurée selon la méthode d'essai décrite dans le paragraphe [134] de la description, ne dépassant pas 900 mm$^2$.

**16.** Utilisation d'une fermeture (20) selon l'une quelconque des revendications 1 à 13 ou 15 pour fermer hermétiquement un récipient.

**17.** Fermeture (20) pour un récipient retenant un produit, construite pour être introduite et retenue solidement dans un col faisant l'entrée dudit récipient, ladite fermeture comprenant au moins :

a) un élément central (22) comprenant au moins un polymère thermoplastique, et
b) au moins une couche périphérique (24) entourant au moins en partie et intimement liée à au moins une surface de l'élément central (22),

dans laquelle l'élément central (22) a une densité dans l'intervalle allant d'environ 100 kg/m$^3$ à environ 350 kg/m$^3$, **caractérisée en ce que** la couche périphérique (24) comprend au moins un copolymère à blocs de styrène dans une quantité dans l'intervalle allant d'environ 15 % en poids à environ 88 % poids, et au moins un polymère supplémentaire et/ou au moins un copolymère supplémentaire, dans une quantité dans l'intervalle allant d'environ 12 % en poids à environ 85 % en poids dans chaque cas relativement au poids total dudit au moins un copolymère à blocs de styrène et dudit au moins un polymère supplémentaire et/ou dudit au moins un copolymère supplémentaire, et la fermeture (20) ayant une valeur de fuite, mesurée selon la méthode d'essai décrite dans le paragraphe [134] de la description, ne dépassant pas 900 mm$^2$.

18. Fermeture (20) selon la revendication 17, la fermeture (20) ayant une valeur de fuite, mesurée selon la méthode d'essai décrite dans le paragraphe [134] de la description, ne dépassant pas 500 mm$^2$.

Fig.1

Fig.2

41

40

42

Fig.3

44

40

44

Fig.4

Fig.5

Fig.6a

Fig.6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5904965 A

- WO 03018304 A1